# EUROPÄISCHE PATENTSCHRIFT

(11) **EP 4 191 084 B1**
(45) Veröffentlichungstag und Bekanntmachung des Hinweises auf die Patenterteilung: **12.06.2024**
(21) Anmeldenummer: 22210909.2
(22) Anmeldetag: 01.12.2022
(51) Int. Cl.: F16C 19/54, F16C 25/08, B67C 3/24, B67C 3/22

(54) **LAGERANORDNUNG ZUM LAGERN EINES BEHÄLTERBEHANDLUNGSKARUSSELLS GEGEN EIN GRUNDGESTELL EINER BEHÄLTERBEHANDLUNGSVORRICHTUNG IN EINER GETRÄNKEABFÜLLANLAGE**
BEARING ARRANGEMENT FOR SUPPORTING A CONTAINER-HANDLING CAROUSEL AGAINST A BASE FRAME OF A CONTAINER-HANDLING APPARATUS IN A BEVERAGE FILLING SYSTEM
ENSEMBLE PALIER POUR SUPPORTER UN CARROUSEL DE TRAITEMENT DE RÉCIPIENTS CONTRE UN BÂTI DE BASE D'UN DISPOSITIF DE TRAITEMENT DE RÉCIPIENTS DANS UNE INSTALLATION DE REMPLISSAGE DE BOISSONS

(30) Priorität: 01.12.2021 DE 102021131574
(43) Veröffentlichungstag der Anmeldung: 07.06.2023
(73) Patentinhaber: KRONES AG, 93073 Neutraubling (DE)
(72) Erfinder: Echtenacher, Albert, 93073 Neutraubling (DE); Schoenfelder, Markus, 93073 Neutraubling (DE)
(74) Vertreter: Nordmeyer, Philipp Werner

(56) Entgegenhaltungen:
- EP-A2- 2 330 071
- WO-A1-01/60536
- WO-A1-2016/114195
- DE-A1-102012 005 529
- DE-C- 499 877
- DE-C- 948 219
- US-A1- 2010 281 826

## Beschreibung

Die vorliegende Erfindung betrifft eine Lageranordnung zum Lagern eines Behälterbehandlungskarussells gegen ein Grundgestell einer Behälterbehandlungsvorrichtung in einer Getränkeabfüllanlage, ein Verfahren zum Vorspannen einer angestellten Lagerung einer Lageranordnung zum Lagern eines Behälterbehandlungskarussells gegen ein Grundgestell einer Behälterbehandlungsvorrichtung in einer Getränkeabfüllanlage, und eine Behälterbehandlungsvorrichtung zum Einsatz in einer Getränkeabfüllanlage.

### Stand der Technik

Im Bereich von Abfüllanlagen zum Befüllen von Behältern mit einem Füllprodukt, beispielsweise einem Getränk, und dem anschließenden Verschließen der befüllten Behälter mit einem Behälterverschluss ist es bekannt, zumindest einige der Behälterbehandlungsvorrichtungen der Abfüllanlage, insbesondere einen Füller zum Befüllen von Behältern mit dem Füllprodukt und einen Verschließer zum Verschließen der befüllten Behälter, jeweils mit einem Behälterverschluss in Rundläuferbauweise auszubilden.

Bei Bearbeitungsvorrichtungen in Rundläuferbauweise ist ein sich um eine zentrale Drehachse drehbares Oberteil, auch Karussell genannt, drehbar an einem Unterteil, auch Grundgestell genannt, gelagert. Die Drehachse ist zumeist vertikal orientiert, mithin im Wesentlichen in Richtung der Gravitationskraft orientiert.

Die Lagerung des Oberteils an dem Unterteil umfasst in der Regel zwei in Richtung der Drehachse gesehen in einem vorgegebenen Abstand zueinander konzentrisch zur Drehachse angeordnete Wälzlager. Wie an sich bekannt, weist jedes der Wälzlager einen Innenring und einen Außenring und eine Mehrzahl von zwischen dem Innenring und dem Außenring angeordneten Wälzkörpern auf.

Die Wälzlager sind zwischen einer sich in einer der Drehachse entsprechenden Längs(mittel)achse erstreckenden Lagerwelle und einem bezogen auf die Längsachse radial außerhalb der Lagerwelle konzentrisch zur dieser angeordneten Lagertopf vorgesehen. Die Innenringe der Wälzlager stehen dabei in an sich bekannter Weise mit der Lagerwelle in Kontakt, wohingegen der Außenring mit dem Lagertopf in Kontakt stehen.

Zur Ausbildung der Lagerung sind verschiedene Arten der Lageranordnung beziehungsweise verschiedene Lagerungskonzepte bekannt. Beispielsweise ist es bekannt, die Lagerung als schwimmende Lagerung auszubilden, bei welcher in axialer Richtung ein Spiel von in der Regel einigen wenigen Zehntelmillimetern zwischen den Wälzlagern vorgesehen ist. Schwimmende Lagerungen sind zumeist kostengünstig, in Hinblick auf Bearbeitungsvorrichtungen in Abfüllanlagen stellen diese sich jedoch als nachteilig dar, da bei einer derartigen Lagerung das Oberteil während des Betriebs zu Schwingungen beziehungsweise Vibrationen neigt.

Ein weiteres Konzept ist das der Fest-Los-Lagerung, bei welcher auf einer Seite ein Festlager zum Aufnehmen von axialen und radialen Kräften und auf der anderen Seite ein Loslager lediglich zum Aufnehmen von radialen Kräften vorgesehen sind. Die Fest-Los-Lagerung eignet sich insbesondere zum Ausgleich von Fertigungstoleranzen oder bei einer unterschiedlichen Erwärmung von Lagerwelle und Lagertopf während des Betriebs. Nachteilig bei allen spielbehafteten Lagerarten ist, dass keine definierten Lagerlasten vorliegen.

Eine hinsichtlich der Vermeidung von Schwingungen beziehungsweise Vibrationen des Oberteils besonders günstige Ausführung der Lagerung stellt die angestellte Lagerung dar. Eine angestellte Lagerung umfasst in der Regel zwei spiegelbildlich angeordnete Schräglager. Die Innenringe oder die Außenringe der Wälzlager werden hierbei gegeneinander verschoben, bis eine vorgegebene Vorspannung erreicht ist. Unter dem Anstellen einer Lagerung versteht man das definierte Verspannen der beiden Lager zueinander. Angestellte Lagerungen unterscheidet man in Hinblick auf die Lage der Drucklinien der Wälzlager, wobei die Drucklinien eines Wälzlagers in Schräglagerbauart einen Kegel ausbilden und sich auf der zentralen Lagerwelle in einem Punkt, der sogenannten Druckkegelspitze, treffen. Bei einer Lage der Druckkegelspitzen beider Wälzlager zwischen den beziehungsweise innerhalb der Positionen der Wälzlager in Richtung der Längsachse, mithin wenn die Druckkegelspitzen nach innen weisen, spricht man von einer X-Anordnung. Entsprechend weisen die Druckkegelspitzen bei einer O-Anordnung nach außen.

Bei angestellten Lagerungen ist von entscheidender Bedeutung, die vorgegebene Vorspannung zwischen den Wälzlagern besonders genau einzustellen. Bei einer zu großen Vorspannung kann es aufgrund übermäßiger Reibung in den Wälzlagern zu einem übermäßigen Verschleiß kommen, sowie die Leichtgängigkeit der Drehung von Lagertopf und Lagerwelle relativ zueinander beeinträchtigt sein. Bei einer zu geringen Vorspannung können sich Nachteile analog einer spielbehafteten Lagerung ergeben.

Die Anstellung kann dadurch erzielt werden, dass eine Mutter auf die Lagerwelle oder in den Lagertopf geschraubt wird, welche eine Kraft in axialer Richtung auf den jeweiligen Lagerring aufbringt. Zur Ermittlung der korrekten Vorspannung ist dabei das Anzugsmoment der Mutter während des Aufschraubens zu detektieren, oder es ist ein durch die Mutter zurückgelegter Weg in axialer Richtung, oftmals bezogen auf einen anfänglichen Kontakt der Mutter mit dem Lagerring, zu messen, da beides als Maß für die Vorspannung umgerechnet werden kann. Dies ist mit einem hohen Aufwand verbunden. Zudem kann die Messung beispielsweise aufgrund des Einflusses von Schmierstoffen oder aufgrund einem Setzverhalten in den Lagern verfälscht sein.

Eine weitere Variante, um die Vorspannung auf die Wälzlager aufzubringen, ist es, ein ringförmiges Vorspannelement, dass zwischen einem an der Lagerwelle beziehungsweise dem Lagertopf befestigtem Element oder einem daran vorgesehenen Absatz und dem entsprechenden Lagerring in einem vorgespannten Zustand angeordnet ist, und dadurch in axialer Richtung eine Federkraft auf den Lagerring aufbringt. Es ist bekannt, als Vorspannelement eine konzentrisch zur Längs(mittel)achse angeordnete Federscheibe zu verwenden. Eine Federscheibe stellt eine zentrale, auf die Lagerwelle aufgefädelte beziehungsweise in den Lagertopf geschobene Tellerfeder dar.

Als Alternative hierzu ist es bekannt, eine einlagige oder mehrlagige Flachdrahtwellenfeder, auch als "Smalley" bezeichnet, anstelle der zentralen Tellerfeder zu verwenden. Smalleys sind vergleichsweise teuer und bergen zudem, wie auch Tellerfedern, wenn auch in etwas geringerem Maße, die Gefahr, dass sie ihre Spannkraft gänzlich verlieren, wenn sie, beispielsweise aufgrund eines durch den menschlichen Monteur begangenen Fehlers während der Montage, oder aufgrund eines unvorhergesehenen Stoßes während des Betriebs auf Block gedrückt werden. Da die Lagerwelle zumeist einen vergleichsweise großen Außendurchmesser aufweist, sind die Innendurchmesser der Tellerfedern beziehungsweise der Smalleys ebenfalls entsprechend groß auszubilden, da diese wie oben beschrieben, auf die Lagerwelle geschoben werden müssen. Zudem ist es bei Tellerfedern und insbesondere Wellenfedern mit großem Innendurchmesser schwierig, bezogen auf die Längsachse in Umfangsrichtung eine gleichmäßige Verteilung der durch die Feder bereitgestellte axialen Kraft zu erzielen.

Angestellten Lagerungen gemein ist deren vergleichsweise komplizierte und aufwändige Wartung und Überholung.

Eine Lageranordnung gemäß dem Oberbegriff des Anspruchs 1 mit einer konzentrisch angeordneten Federscheibe basierend auf einem Tellerfederpaar, die mittels einer Spannmutter in Richtung der Lagerung gedrückt wird, ist beispielsweise aus der DE 948 219 C zu entnehmen.

Behälterbehandlungsvorrichtungen, die den technologischen Hintergrund der vorliegenden Erfindung bilden, sind beispielsweise aus der EP 2 330 071 A2, WO 01/60536 A1 und US 2010/0281826 A1 bekannt.

### Darstellung der Erfindung

Ausgehend von dem bekannten Stand der Technik ist es eine Aufgabe der vorliegenden Erfindung, eine verbesserte Lageranordnung zum Lagern eines Behälterbehandlungskarussells gegen ein Grundgestell einer Behälterbehandlungsvorrichtung in einer Getränkeabfüllanlage, eine verbesserte Behälterbehandlungsvorrichtung, sowie ein entsprechendes Verfahren bereitzustellen.

Die Aufgabe wird durch eine Lageranordnung zum Lagern eines Behälterbehandlungskarussells gegen ein Grundgestell einer Behälterbehandlungsvorrichtung in einer Getränkeabfüllanlage mit den Merkmalen des Anspruchs 1 gelöst. Vorteilhafte Weiterbildungen ergeben sich aus den Unteransprüchen, der Beschreibung und den Figuren.

Entsprechend wird eine Lageranordnung zum Lagern eines Behälterbehandlungskarussells gegen ein Grundgestell einer Behälterbehandlungsvorrichtung in einer Getränkeabfüllanlage, vorgeschlagen, umfassend eine sich entlang einer Längsachse erstreckende Lagerwelle, einen relativ zur Lagerwelle drehbaren Lagertopf, eine zwischen der Lagerwelle und dem Lagertopf angeordnete angestellte Lagerung zum Lagern des Lagertopfes gegen die Lagerwelle und eine ringförmige Vorspanneinheit zum Aufbringen einer vorgegebenen Vorspannung auf die angestellte Lagerung.

Die Lageranordnung ist dadurch gekennzeichnet, dass die ringförmige Vorspanneinheit zum Aufbringen der Vorspannung auf die angestellte Lagerung eine Mehrzahl von bezogen auf die Längsachse im Umfangsrichtung gleichmäßig verteilen Federpaketen umfasst.

Dadurch, dass die ringförmige Vorspanneinheit zum Aufbringen der Vorspannung auf die angestellte Lagerung eine Mehrzahl von bezogen auf die Längsachse in Umfangsrichtung gleichmäßig verteilen Federpaketen umfasst, kann auf einer Weise eine präzise Einstellung der Vorspannung auf die Lagerung erzielt werden. Zudem kann die in Richtung Lagerung wirkende Kraft über den Umfang der Vorspanneinheit beziehungsweise der Lagerung besonders gleichmäßig bereitgestellt werden.

Ferner kann die berechnete vorzusehende Lagervorspannung in vergleichsweise einfacher Weise auf die Federpakete umgerechnet werden. Durch das Vorsehen einer Mehrzahl von Federpaketen ist die durch diese bereitgestellte Kraft in einfacher Weise skalierbar, bevorzugt, indem eine Anzahl an Federpaketen variiert wird.

Die Vorspannung ist in Richtung der Längsachse orientiert beziehungsweise wirkt in Richtung der Längsachse, um so die Anstellung der Lagerung in Richtung der Längsachse bereitzustellen.

Um hinsichtlich der Lageranordnung beispielsweise Gewicht zu sparen, kann die Lagerwelle rohrförmig ausgebildet sein. Ist die Lagerwelle mit dem drehenden Oberteil verbunden beziehungsweise ist die Lagerwelle am Oberteil fixiert, so kann zudem aufgrund der geringen Masse in Vergleich zu einer Vollwelle ein reduzierter Energieaufwand zum Drehen des Oberteils erzielt werden.

Je nach Anordnung der Lager der angestellten Lagerung zu deren Ausbildung kann die Vorspanneinheit entweder an der Lagerwelle angeordnet sein oder an dem Lagertopf angeordnet sein.

Gemäß einer weiteren bevorzugten Ausführungsform umfasst zumindest ein Federpaket eine Spiralfeder, eine Wellenfeder und/oder eine Tellerfeder, wobei bevorzugt zumindest ein Federpaket eine mehrlagige Wellenfeder und/oder eine Mehrzahl von in Richtung einer Wirkrichtung des Federpakets übereinander gestapelten Tellerfedern umfasst.

Die Wirkrichtung des Federpakets ist parallel zur Längsachse orientiert, mithin in axialer Richtung bezogen auf die Lageranordnung. Bei der besonders bevorzugten Ausbildung mit einer Mehrzahl von in Wirkrichtung, mithin axialer Richtung, angeordneter Tellerfedern sind hierbei bevorzugt zumindest zwei, besonders bevorzugt alle, benachbarte Tellerfedern jeweils zueinander gespiegelt angeordnet. Mit anderen Worten sind die Tellerfedern bevorzugt wechselsinnig angeordnet. Bei einer wechselsinnigen Anordnung der Tellerfedern kann eine Addition der Federwege jeder der Tellerfedern bei gleichbleibender Kraft erzielt werden. Alternativ oder zusätzlich können auch zumindest zwei, bevorzugt alle, benachbarte Tellerfedern gleichsinnig angeordnet sein. Bei gleichsinniger Anordnung addieren sich die Federkräfte der gleichsinnig angeordneten benachbarten Tellerfedern bei im Wesentlichen gleichbleibendem Federweg. Durch die Möglichkeit des Schichtens, mithin der Kombination aus gleichsinniger und gegensinniger Anordnung können unterschiedlichste Federkennlinien realisiert werden. So kann mittels der Ausbildung und der Anzahl der Federpakete die durch die Vorspanneinheit bereitgestellte Vorspannung besonders genau auf die berechnete, theoretisch erforderliche Vorspannung eingestellt werden.

Gemäß einer Weiterbildung können Tellerfedern unterschiedlicher Dicke in geeigneter Weise, mithin gegensinnig, gleichsinnig und/oder in Kombination von gegensinnig und gleichsinnig, angeordnet werden. Dadurch lassen sich gar progressive Federkennlinien realisiert. Hierzu können vorzugsweise mehrere Tellerfedern unterschiedlicher Materialstärke und/oder mit unterschiedlichen Materialien, gleiche Tellerfedern mit verschieden starken Zwischenringen und/oder unterschiedlichen Schichtungsarten verwendet werden.

Gemäß einer weiteren bevorzugten Ausführungsform umfasst die Vorspanneinheit ein Mutterelement mit einem Gewindeabschnitt, welcher mit einem korrespondierend geformten Gewindeabschnitt an der Lagerwelle oder dem Lagertopf in Eingriff ist, und einen Spannring zum Übertragen der via der Federpakete bereitgestellten Vorspannung auf einen Lagerring der angestellten Lagerung, wobei die Federpakete zwischen dem Mutterelement und dem Spannring angeordnet sind. Dadurch kann einerseits das Mutterelement präzise an der Lagerwelle respektive dem Lagertopf angeordnet werden, und zudem via des Spannrings die durch die Federpakete bereitgestellte Federkraft besonders gleichmäßig auf den entsprechenden Lagerring übertragen werden. Ferner kann durch Drehen der Mutter die Federkraft und mithin die Vorspannung weiter angepasst werden.

Die Komplexität von Lagertopf respektive Lagerwelle und mithin die Fertigungskosten der Lageranordnung und mithin einer die Lageranordnung aufweisenden Behälterbehandlungsvorrichtung können besonders gering ausfallen, wenn ein Gewindebereitstellungsteil zum Bereitstellen des Gewindeabschnitts an der Lagerwelle oder zum Bereitstellen des Gewindeabschnitts an dem Lagertopf an der Lagerwelle respektive dem Lagertopf fixiert ist, selbstredend je nachdem, ob das Mutterelement zur Interaktion mit einem Gewindeabschnitt am Lagertopf oder an der Lagerwelle ausgebildet ist. Vorzugsweise ist das Gewindebereitstellungsteil bevorzugt an einer Stirnseite oder einem sich in radialer Richtung erstreckenden Flansch beziehungsweise radialen Absatz der Lagerwelle respektive einer Stirnseite oder einem sich in radialer Richtung erstreckenden Flansch beziehungsweise radialen Absatz des Lagertopfes fixiert.

Wenn das Mutterelement der Vorspanneinheit ausgebildet ist, mit ihrem Gewindeabschnitt mit einem Gewindeabschnitts an der Lagerwelle in Eingriff zu sein, so ist das Gewindebereitstellungsteil entsprechend ausgebildet, den Gewindeabschnitt an der Lagerwelle bereitzustellen. Ist das Mutterelement der Vorspanneinheit hingegen ausgebildet, mit ihrem Gewindeabschnitt mit einem Gewindeabschnitt am Lagertopf in Eingriff zu sein, so ist logischerweise das Gewindebereitstellungsteil ausgebildet, den Gewindeabschnitt an dem Lagertopf bereitzustellen.

Um die Federpakete sicher in der Vorspanneinheit zu positionieren, können das Mutterelement und/oder der Spannring eine Mehrzahl von zum Aufnehmen eines Federpakets ausgebildeten Aussparungen aufweisen, wobei bevorzugt jeweils eine Aussparung zum Aufnehmen eines der Federpakete vorgesehen ist. Mit anderen Worten umfassten das Mutterelement und/oder der Spannring vorzugsweise eine Anzahl an Aussparungen, welche der Anzahl der in Umfangsrichtung verteilten Federelement entspricht. Dann kann jeweils eine Aussparung jeweils einem Federpaket zugeordnet sein.

Vorzugsweise weisen die Aussparungen eine Tiefe auf, die größer ist als eine Blocklänge des aufgenommenen Federpakets, welche das Federpaket in einem komplett zusammengedrückten Zustand, mit anderen Worten "auf Block gedrückt" aufweist. Vorzugsweise entspricht die Tiefe der Blocklänge zuzüglich einer vorgegebenen Restlänge, mithin einer vorgegebenen Mindestlänge des Federelements. So kann verhindert werden, dass die Federpakete übermäßig zusammengedrückt werden und dadurch etwaige nicht mehr die zur Vorspannung beziehungsweise dem Anstellen der Lagerung erforderliche Federkraft bereitstellen können. Ferner ist die Tiefe der Aussparung bevorzugt derart bemessen, dass sie geringer ist als eine Nulllänge des Federpaktes, welches letzteres in einem unbelasteten Zustand aufweist, auch als Nennlänge der unbelasteten Feder bezeichnet.

Bevorzugt entspricht die Tiefe der Aussparung der Differenz aus der Nulllänge des Federpakets, welches letzteres in einem unbelasteten Zustand aufweist, und einem vorgegebenen Vorspannweg des Federpakets, wobei das Federpaket bei einer Stauchung um den vorgegebenen Vorspannweg die durch das jeweilige Federpaket bereitzustellende Federkraft als deren Beitrag zur Bereitstellung der erforderlichen Vorspannung bereitstellt. Mit anderen Worten entspricht die Tiefe bevorzugt einer Nennlängen der Feder, zugeordnet zu der vorgebebenen Federkraft. Entsprechend kann die Vorspannung der angestellten Lagerung auf besonders einfache Weise auf die erforderliche Vorspannung eingestellt werden, und zwar lediglich, indem das Mutterelement und der Spannring auf Kontakt miteinander eingebaut werden.

Gemäß einer weiteren bevorzugten Ausführungsform ist zumindest ein Positionierungselement, bevorzugt ein Passstift, zum Positionieren des Mutterelements und des Spannrings relativ zueinander in Umfangsrichtung und in radialer Richtung und/oder zum Führen des Spannrings in Richtung der Längsachse relativ zum Mutterelement zwischen dem Mutterelement und dem Spannring angeordnet, wobei bevorzugt eine Mehrzahl von Positionierungselementen vorgesehen ist, wobei bevorzugt jeweils ein Positionierungselement jeweils einem Federpaket zugeordnet ist, wobei bevorzugt zumindest ein Positionierungselement bezogen auf eine Mittelachse eines Federpakets zentrisch zur Mittelachse angeordnet ist, wobei das Federpaket das Positionierungselement bevorzugt bezogen auf die Mittelachse in Umfangsrichtung umgibt, wobei bevorzugt das Positionierungselement alternativ oder zusätzlich zum Vorpositionieren und/oder Positionieren des ihm zugeordneten Federpakets in Richtung der Längsachse ausgebildet ist.

Das zumindest eine Positionierungselement kann mithin unter anderem den Zwecken dienen, eine Positionierung, bevorzugt Zentrierung, von Mutterelement und Spannring zueinander, sowie alternativ oder zusätzlich eine Positionierung zumindest eines Federpakets oder von Teilen des Federpakets, bevorzugt zumindest einer Feder, besonders bevorzugt einer Tellerfeder oder einer Wellenfeder, des Federpakets gegenüber dem Mutterelement und/oder gegenüber dem Spannring, bereitzustellen.

Die Vorspanneinheit kann bevorzugt zumindest ein Fixierungselement zum Fixieren des Mutterelements und des Spannrings zueinander umfassen, wobei bevorzugt in einem vorgegebenen fixierten Zustand eine der angestellten Lagerung zugewandten axiale Seite des Mutterelements mit einer der angestellten Lagerung abgewandten axialen Seite des Spannrings in Kontakt steht. Mit anderen Worten sind das Mutterelement und der Spannring in dem vorgegebenen fixierten Zustand in Richtung der Längsachse gesehen spaltfrei zueinander angeordnet.

Der Begriff "axiale Seite" bezieht sich hierbei auf die Längsachse, es handelt sich mithin bei den axialen Seiten um Stirnseiten bezogen auf die Längsachse.

Gemäß einer bevorzugten Ausführungsform ist der Gewindeabschnitt des Mutterelements als Innengewinde ausgebildet und steht mit einem an der Lagerwelle als Außengewinde ausgebildeten Gewindeabschnitt der Lagerwelle in Eingriff, wobei bevorzugt die angestellte Lagerung eine O-Anordnung aufweist, wobei bevorzugt die Vorspanneinheit, bevorzugt via dem Spannring, die mittels der Federpakete bereitgestellte Vorspannung auf einen Innenring der angestellten Lagerung aufbringt.

Gemäß einer weiteren bevorzugten Ausführungsform ist der Gewindeabschnitt des Mutterelements als Außengewinde ausgebildet und steht mit einem an dem Lagertopf als Innengewinde ausgebildeten Gewindeabschnitt des Lagertopfes in Eingriff, wobei bevorzugt die angestellte Lagerung eine X-Anordnung aufweist, wobei bevorzugt die Vorspanneinheit, bevorzugt via dem Spannring, die mittels der Federpakete bereitgestellte Vorspannung auf einen Außenring der angestellten Lagerung aufbringt.

Um zu verhindern, dass sich die Vorspanneinheit, bevorzugt das Mutterelement, nach Einstellen der vorgegebenen Vorspannung, etwa während des Betriebs, ungewollt relativ zu dem Bauteil, an welchem es angebracht ist beziehungsweise mit welchem es in Eingriff steht, verstellt, kann die Vorspanneinheit zumindest ein Sicherungselement zum Sichern der Vorspanneinheit gegenüber der Lagerwelle, wenn die Vorspanneinheit mit der Lagerwelle in Eingriff steht, oder dem Lagertopf, wenn die Vorspanneinheit mit dem Lagertopf in Eingriff steht, bevorzugt zum Sichern des Mutterelementes gegen ein Verdrehen um die Längsachse relativ zur Lagerwelle oder relativ zum Lagertopf umfassen. Das Sicherungselement ist bevorzugt in Form eines Sicherungsbleches ausgebildet. Das Sicherungselement kann zudem an der Lagerwelle oder an dem Lagertopf fixierbar sein, wobei bevorzugt durch die Fixierung des Sicherungselements die Vorspanneinheit, bevorzugt das Mutterelement der Vorspanneinheit, gegen ein Verdrehen gesichert ist.

Dabei ist das Sicherungselement ausgebildet, die Vorspanneinheit gegen ein Verdrehen gegenüber der Lagerwelle zu sichern, wenn die Vorspanneinheit an der Lagerwelle angeordnet ist, und entsprechend ist das Sicherungselement ausgebildet, die Vorspanneinheit gegen ein Verdrehen gegenüber dem Lagertopf zu sichern, wenn die Vorspanneinheit am Lagertopf angeordnet ist.

Gemäß einer weiteren bevorzugten Ausführungsform umfasst die angestellte Lagerung zwei in Längsachse gesehen in einem vorgegebenen Abstand zueinander angeordnete Wälzlager, wobei bevorzugt jedes Wälzlager einen Innenring und einen Außenring und eine Mehrzahl von zwischen dem Innenring und dem Außenring angeordneten Wälzkörpern umfasst, wobei bevorzugt zumindest ein Wälzlager als Kugellager, Rollenlager, vorzugsweise Zylinderrollenlager oder Kegelrollenlager, ausgebildet ist, wobei bevorzugt zumindest ein Wälzlager, vorzugsweise alle Wälzlager, als Schräglager ausgebildet sind.

Vorzugsweise ist zwischen der Vorspanneinheit und dem der Vorspanneinheit zugewandten Lager der angestellten Lagerung in Richtung der Längsachse gesehen ein Laufring für eine radiale Dichtung, bevorzugt eine dynamische radiale Dichtung, besonders bevorzugt einen radialen Dichtring, angeordnet, wobei der Laufring ausgebildet ist, Druckkräfte in Richtung der Längsachse zu übertragen. Bevorzugt umfasst der Laufring eine Metalllegierung, besonders bevorzugt eine Stahllegierung.

Die oben gestellte Aufgabe wird weiterhin durch eine Behälterbehandlungsvorrichtung für eine Getränkeabfüllanlage mit den Merkmalen des Anspruchs 11 gelöst. Vorteilhafte Weiterbildungen ergeben sich aus der vorliegenden Beschreibung und den Figuren.

Entsprechend wird eine Behälterbehandlungsvorrichtung für eine Getränkeabfüllanlage vorgeschlagen, umfassend ein Grundgestell und ein um eine zentrale Drehachse relativ zum Grundgestell drehbares Behälterbehandlungskarussell.

Die Behälterbehandlungsvorrichtung umfasst ferner eine Lageranordnung gemäß einer der vorstehenden Ausführungsformen, welche zwischen dem Grundgestell und dem Behälterbehandlungskarussell zum Lagern des Behälterbehandlungskarussells an dem Grundgestell angeordnet ist.

Dadurch, dass die Behälterbehandlungsvorrichtung ferner eine Lageranordnung gemäß einer der vorstehenden Ausführungsformen umfasst, können die hinsichtlich der Lageranordnung beschriebenen Vorteile und Wirkungen in analoger Weise auch durch die Behälterbehandlungsvorrichtung erzielt werden.

Vorzugsweise sind die Lagerwelle an dem Grundgestell und der Lagertopf an dem Behälterbehandlungskarussell befestigt. Alternativ können auch die Lagerwelle mit dem Behälterbehandlungskarussell und der Lagertopf mit dem Grundgestell verbunden sein.

Die oben gestellte Aufgabe wird weiterhin durch ein Verfahren zum Vorspannen einer angestellten Lagerung einer Lageranordnung zum Lagern eines Behälterbehandlungskarussells gegen ein Grundgestell einer Behälterbehandlungsvorrichtung in einer Getränkeabfüllanlage mit den Merkmalen des Anspruchs 12 gelöst. Vorteilhafte Weiterbildungen des Verfahrens ergeben sich aus den Unteransprüchen sowie der vorliegenden Beschreibung und den Figuren.

Entsprechend wird ein Verfahren zum Vorspannen einer angestellten Lagerung einer Lageranordnung zum Lagern eines Behälterbehandlungskarussells gegen einem Grundgestell einer Behälterbehandlungsvorrichtung in einer Getränkeabfüllanlage gemäß einer der vorstehenden Ausführungsformen vorgeschlagen, umfassend das Fixieren der Vorspanneinheit, bevorzugt des Mutterelements und des Spannrings der Vorspanneinheit zueinander, in einem vorgegebenen fixierten Zustand, das Aufbringen der Vorspanneinheit an der Lagerwelle oder dem Lagertopf, so dass die Vorspanneinheit mit einem Lagerring der angestellten Lagerung in Richtung der Längsachse in Kontakt steht, das Sichern der Position der Vorspanneinheit an der Lagerwelle respektive dem Lagertopf, und das Lösen des fixierten Zustands.

Durch das Verfahren können die hinsichtlich der Lageranordnung und der Behälterbehandlungsvorrichtung beschriebenen Vorteile und Wirkungen in analoger Weise erzielt werden.

Gemäß einer weiteren bevorzugten Ausführung umfasst das Aufbringen der Vorspanneinheit ein Aufschrauben der Vorspanneinheit an die Lagerwelle oder an den Lagertopf, wobei bevorzugt das Sichern der Position der Vorspanneinheit ein Sichern der aufgeschraubten Vorspanneinheit gegen ein Verdrehen gegenüber der Lagerwelle, wenn die Vorspanneinheit an die Lagerwelle aufgeschraubt ist, respektive gegenüber dem Lagertopf, wenn die Vorspanneinheit an den Lagertopf aufgeschraubt ist, umfasst.

Vorzugsweise umfasst das Aufbringen der Vorspanneinheit an der Lagerwelle oder dem Lagertopf, so dass die Vorspanneinheit mit einem Lagerring der angestellten Lagerung in Richtung der Längsachse in Kontakt steht, zunächst ein Anziehen der Vorspanneinheit, bis die Lager der angestellten Lagerung spielfrei und bevorzugt verspannt, die Lagerung mithin in einem angestellten Zustand vorliegen, umfasst ferner ein anschließendes Lösen der Verspannung, mithin ein Lockern der bevorzugt verspannten Vorspanneinheit, und daraufhin ein erneutes Anziehen der Vorspanneinheit, um dadurch die vorgegebene Vorspannung auf die angestellte Lagerung einzustellen.

Wenn die Vorspanneinheit ein Mutterelement und einen Spannring umfasst, so liegt die Vorspanneinheit bevorzugt zumindest beim vorstehend letztgenannten Schritt des erneuten Anziehens der Vorspanneinheit zum Einstellen der vorgegebenen Vorspannung auf die angestellte Lagerung zumindest initial im vorgegebenen fixierten Zustand vor, in welchem wie oben beschrieben die der angestellten Lagerung zugewandten axiale Seite des Mutterelements mit einer der angestellten Lagerung abgewandten axialen Seite des Spannrings in Kontakt steht.

Der vorstehend genannte Schritt des erneuten Anziehens der Vorspanneinheit zum Einstellen der vorgegebenen Vorspannung auf die angestellte Lagerung umfasst ferner vorzugsweise ein sich bevorzugt an den Schritt des Lösens der Verspannung anschließendes Anziehen relativ zur Lagerwelle respektive zum Lagertopf des sich im fixierten Zustand befindlichen Mutterelements, bis der Spannring mit dem zu verspannenden Lagerring der angestellten Lagerung spielfrei in Kontakt steht. Vorzugsweise wird das Mutterelement hierbei mit einem vorgegebenen Anzugsmoment angezogen, bevorzugt handfest angezogen. Der Schritt des erneuten Anziehens der Vorspanneinheit zum Einstellen der vorgegebenen Vorspannung auf die angestellte Lagerung umfasst weiterhin bevorzugt ein anschließendes Lösen des fixierten Zustands, bevorzugt durch Lösen des zumindest einen Fixierungselements zum Fixieren des Mutterelements und des Spannrings zueinander im vorgegebenen fixierten Zustand.

Unter "handfest" ist hier insbesondere ein "handfest" im Sinne der Norm EN 1090-2 beziehungsweise der DASt-Richtlinie 024 von 2018, ISBN 978-3-941687-35-6 beziehungsweise analog dazu zu verstehen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Schnittansicht durch eine Behälterbehandlungsvorrichtung in einer Getränkeabfüllanlage;
- Figur 2: schematisch eine perspektivische Seitenansicht in Explosionsdarstellung einer Vorspanneinheit aus Figur 1;
- Figur 3: schematisch eine perspektivische Schnittansicht der Vorspanneinheit aus Figur 1;
- Figur 4 und 5: jeweils schematisch eine Schnittansicht durch die Vorspanneinheit gemäß der Figuren 1 bis 3 auf Höhe eines Federpakets der Vorspanneinheit;
- Figur 6: schematisch eine perspektivische Schnittansicht durch eine Lageranordnung der Behälterbehandlungsvorrichtung aus Figur 1;
- Figur 7: schematisch eine Detailseitenansicht der Schnittansicht aus Figur 6 im Bereich eines Federpakets;
- Figur 8: schematisch eine weitere Ansicht der Detailseitenansicht aus Figur 7;
- Figur 9: schematisch eine perspektivische Detailansicht einer Oberseite der Behälterbehandlungsvorrichtung aus Figur 6; und
- Figur 10: schematisch eine Lageranordnung gemäß einer weiteren Ausführungsform.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

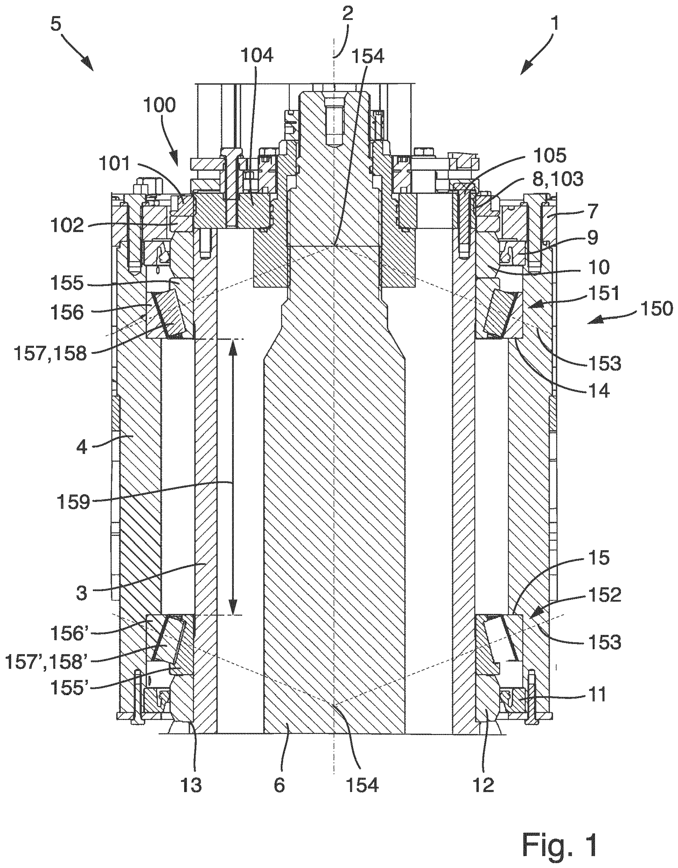

Figur 1 zeigt schematisch eine Schnittansicht durch eine Behälterbehandlungsvorrichtung 5 in einer Getränkeabfüllanlage, vorliegend ausgebildet als Verschließer zum Verschließen von Behältern mit einem Behälterverschluss. Die Behälterbehandlungsvorrichtung 5 umfasst ein Grundgestell 6 und ein relativ zum Grundgestell 6 um eine zentrale Drehachse 16, welcher einer im Folgenden näher beschriebenen Längsachse 2 entspricht, drehbares Behälterbehandlungskarussell 7. Zur Realisierung der Drehbarkeit des Behälterbehandlungskarussells 7 gegenüber dem Grundgestell 6 ist das Behälterbehandlungskarussell 7 gegen das Grundgestell 6 mittels einer Lageranordnung 1 drehbar gelagert.

Die Lageranordnung 1 umfasst eine sich entlang der Längsachse 2 erstreckende Lagerwelle 3 und einen relativ zur Lagerwelle 3 drehbaren Lagertopf 4. Zwischen der Lagerwelle 3 und dem Lagertopf 4 ist eine angestellte Lagerung 150 zum Lagern des Lagertopfes 4 gegen die Lagerwelle 3 angeordnet. Vorliegend ist das Behälterbehandlungskarussell 7 mit dem Lagertopf 4 verbunden. Ferner ist das Grundgestell 6 mit der Lagerwelle 3 verbunden. Die Lagerwelle 3 ist vorliegend als Hohlwelle, mithin rohrförmig, ausgebildet.

Zum Aufbringen einer vorgegebenen Vorspannung in Richtung der Längsachse 2 auf die Lagerung 150, mithin zum Bereitstellen beziehungsweise Ausbilden der Anstellung der Lagerung 150, umfasst die Langeranordnung 1 ferner eine ringförmige Vorspanneinheit 100.

Die angestellte Lagerung 150 umfasst zwei in Richtung der Längsachse 2 in einem vorgegebenen Abstand 159 voneinander beabstandete Wälzlager 151, 152, welche vorliegend jeweils als Schräglager, gemäß dieser bevorzugten Ausführungsform in Form von Kegelrollenlagern, ausgebildet sind. Jedes Wälzlager 151, 152 umfasst einen Innenring 155 einen Außenring 156 und einen zwischen den Ringen 155, 156 angeordneten Käfig 158, welcher in Umfangsrichtung bezogen auf die Längsachse 2 eine Mehrzahl von gleichmäßig verteilten Wälzkörpern 157, vorliegend ausgebildet als Kegel, umfasst.

Die angestellte Lagerung 150 ist nach außen hin abgedichtet ausgebildet, vorliegend indem in Richtung der Längsachse 2 betrachtet außerhalb der beiden Wälzlager 151, 152 jeweils eine Dichtung vorgesehen ist, die jeweils ausgebildet aus einem an der Lagerwelle 3 angeordneten Laufring 10, 12 und einem am Lagertopf 4 angeordneten Radialdichtring 9, 11 ist. So kann verhindert werden, dass die Wälzlager 151, 152 aufgrund von Verunreinigungen Schäden davontragen.

Entsprechend ist der Innenring 155` des zweiten Wälzlagers 152 nicht direkt mit dem Anschlag 13 in Kontakt, sondern über den drucksteif ausgebildeten Laufring 12. Analog hierzu steht der Innenring 155 des ersten Wälzlagers 151 nicht direkt mit der Vorspanneinheit 100 in Kontakt, sondern über den drucksteif ausgebildeten Laufring 10.

Unter dem Ausdruck "in Kontakt stehen" wir hierein verstanden, dass zwischen den "in Kontakt stehenden" Komponenten kein Spiel vorliegt, insbesondere kein Spiel in Richtung der Längsachse 2. Zwischen den Komponenten können dabei weitere Teile angeordnet sein, wie beispielsweise der zuvor beschriebene Laufring 10, 12, wobei die Komponenten und die weiteren Teile dann jeweils spielfrei zueinander vorliegen, mithin sich jeweils berühren. Mit anderen Worten fällt unter dem Ausdruck "in Kontakt stehen" nicht nur ein direktes Berühren, sondern ebenfalls ein indirektes Berühren beziehungsweise indirektes in Kontakt stehen.

Unter dem Anstellen einer Lagerung versteht man das definierte Verspannen der beiden Lager 151, 152 zueinander. Zum Erreichen der vorgegebenen Vorspannung beziehungsweise der Anstellung der Lagerung 150 werden gemäß dieser bevorzugten Ausführungsform die Innenringe 155, 155' beiden Wälzlager 151, 152 aufeinander zu gedrückt, bis die vorgegebene Vorspannung erreicht ist. Gemäß dieser Ausführungsform wird das dadurch erzielt, dass der Innenring 155` des in Figur 1 unten dargestellten zweiten Wälzlagers 152 in Richtung der Längsachse 2 an einem radialen Absatz 13 anschlägt und der Innenring 155 des in Figur 1 oben dargestellten ersten Wälzlagers 151 durch die Vorspanneinheit 100 Richtung des zweiten Wälzlagers 152 gedrückt wird, wie in Hinblick auf die folgenden Figuren näher beschrieben.

Da die Wälzlager 151, 152 als Schräglager ausgebildet sind, bilden ihre Drucklinien 153 jeweils einen Kegel aus und treffen sich jeweils in einer Druckkegelspitze 154. Die angestellte Lagerung 150 ist vorliegend in O-Anordnung ausgeführt, mithin weisen die Druckkegelspitzen 154 in Bezug auf die beiden Wälzlager 151, 152 nach außen.

Der Kraftfluss verläuft innerhalb der Lageranordnung 1 von der Lagerwelle 3 über die Vorspanneinheit 100 in den Innenring 155 des ersten Wälzlagers 151, weiter über dessen Wälzkörper 157 auf den Außenring 156, welcher sich wiederum in Richtung der Längsachse 2 an einem radialen Absatz 14 des Lagertopfes 4 abstützt, dadurch weiter über den Lagertopf 4 in Richtung auf das zweite Lager 52 zu, über einen weiteren Absatz 15 des Lagertopfes 4 weiter auf den Außenring 156`, weiter über Wälzlager 157` in den Innenring 155` und, über den Laufring 12, zum Absatz 13 und damit zurück in Lagerwelle 3.

Zum Krafteinleitung in den Innenring 155 drückt, wie bereits oben beschrieben, die Vorspanneinheit 100 auf den Innenring 155, vorliegend über den dazwischen angeordneten Laufring 10. Gemäß dieser bevorzugten Ausführungsform stützt sich die Vorspanneinheit 100 hierzu mit einem Mutterelement 101 an der Lagerwelle 3 ab und drückt mit einem bezogen auf das Mutterelement 101 auf Seiten der Lagerung 150 vorgesehenen optionalen Spannring 102 - über den dazwischen vorliegenden Laufring 10 - auf den Innenring 155.

Zur Bereitstellung beziehungsweise dem Aufbringen der Vorspannung auf die angestellte Lagerung umfasst die ringförmige Vorspanneinheit 100 ferner eine hier nicht gezeigte Mehrzahl von bezogen auf die Längsachse 2 im Umfangsrichtung gleichmäßig verteilen Federpaketen.

Um sich an der Lagerwelle 3 abzustützen, umfasst das Mutterelement 101 einen als Innengewinde ausgebildeten Gewindeabschnitt 103, welcher mit einem korrespondierend geformten, in Form eines Außengewindes bereitgestellten Gewindeabschnitt 8 an der Lagerwelle 3 in Eingriff ist.

Die in dieser Ansicht nicht sichtbaren Federpakete sind gemäß dieser bevorzugten Ausführungsform zwischen dem Mutterelement 101 und dem Spannring 102 angeordnet. Alternativ kann auch auf den Spannring verzichtet werden. Dann stehen die Federpakete bevorzugt direkt mit dem entsprechenden Lagerring, hier dem Innenring 155, in Kontakt, wobei - wie oben beschrieben - weitere Komponenten, die nicht Teil der Vorspanneinheit 100 sind, wie etwa der Laufring 10 zwischen den Federpaketen und dem Innenring 155 angeordnet sein können und somit einen indirekten Kontakt, welcher ebenfalls als Kontakt im Sinne dieses Dokumentes verstanden wird, bereitstellen.

Für die Bereitstellung des Gewindeabschnitts 8 an der Lagerwelle 3 ist ein Gewindebereitstellungsteil 104, vorliegend in Form einer Spannscheibe, an der Lagerwelle 2 fixiert. Das Gewindebereitstellungsteil 104 ist hierzu an einer Stirnseite der Lagerwelle 3 mittels einer Mehrzahl von Schrauben 105 fixiert.

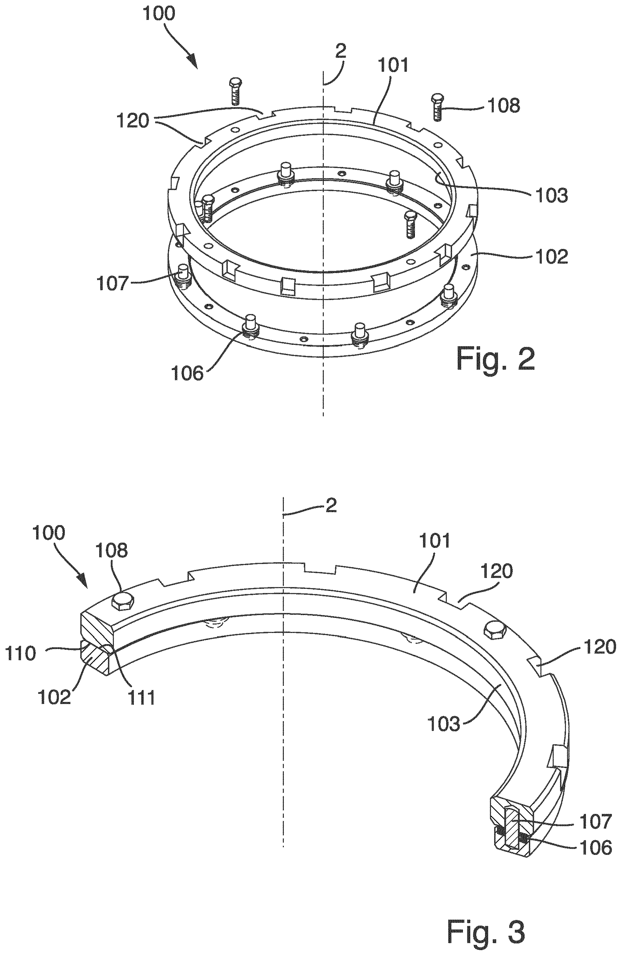

In Figur 2 ist schematisch eine perspektivische Seitenansicht in Explosionsdarstellung der Vorspanneinheit 100 aus Figur 1 gezeigt, und in Figur 3 ist schematisch eine perspektivische Schnittansicht der Vorspanneinheit 100 aus Figur 1 gezeigt.

In Figur 2 sind die bezogen auf die Längsachse 2 in Umfangsrichtung gleichmäßig verteilen Federpakete 106 zu erkennen.

Wie ferner aus den Figuren 2 und 3 zu erkennen, umfasst die Vorspanneinheit 100 eine Mehrzahl von in Form von Passstiften 107 ausgebildeten Positionierungselementen, die zwischen dem Mutterelement 101 und dem Spannring 102 angeordnet sind und das Mutterelement 101 und den Spannring 102 relativ zueinander zentrieren. Jedem Positionierungselement ist jeweils ein Federpaket 106 zugeordnet und fungiert ebenfalls zur Positionierung des Federpakets 106. Der Spannring 102 ist durch die Passstifte in Richtung der Längsachse 2 relativ zum Mutterelement 101 axial geführt.

Die Vorspanneinheit 100 umfasst ferner eine Mehrzahl von in Form von Schrauben 108 ausgebildeten Fixierungselementen zum Fixieren des Mutterelements 101 und des Spannrings 102 zueinander in einem vorgegebenen fixierten Zustand, in welchem eine der angestellten Lagerung 150 (siehe Figur 1) zugewandte axiale Seite 110 des Mutterelements 101 mit einer der angestellten Lagerung 150 abgewandten axialen Seite 111 des Spannrings 102 in direkten Kontakt steht. Der fixierte Zustand ist in Figur 3 gezeigt.

Wie ferner aus den Figuren 2 und 3 zu entnehmen, weist die Vorspanneinheit 100, gemäß dieser bevorzugten Ausführungsform im Mutterelement 101, eine Mehrzahl von in Umfangsrichtung gleichmäßig verteilten Vertiefungen 120 auf, die zum Aufnehmen eines Sicherungselements (hier nicht gezeigt) zum Sichern der Position der Vorspanneinheit 100 relativ zur Lagerwelle 3 ausgebildet sind.

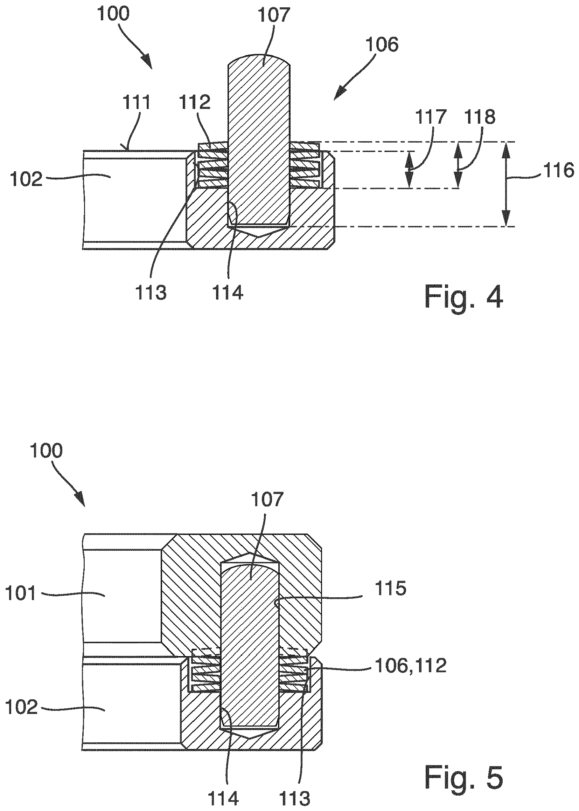

Figur 4 und 5 zeigen jeweils schematisch eine Schnittansicht durch die Vorspanneinheit 100 gemäß der Figuren 1 bis 3 auf Höhe eines Federpakets 106, wobei in Figur 3 die Vorspanneinheit 100 ohne dem Mutterelement 101 gezeigt ist, um die Funktionalität des Federpakets 106 besser darlegen zu können. In Figur 5 hingegen ist Vorspanneinheit 100 im fixierten Zustand wie vorstehend beschrieben gezeigt.

Wie in Hinblick auf Figur 4 zu nehmen, umfasst die Spannscheibe 102 eine Passaufnahme 114 zum Aufnehmen des Passstiftes 107. Konzentrisch zur Passaufnahme 114 angeordnet umfasst die Spannscheibe 102 eine Aussparung 113 zum Aufnehmen eines Federpakets 106.

Die Passaufnahme 114 weist bezogen auf die axiale Seite 111 eine Tiefe 116 auf, welche größer ist, als die Tiefe 117 der Aussparung 113. Die Aussparung 113 weist einen Durchmesser auf, der größer ist als der Durchmesser der Passaufnahme 114. Anders ausgedrückt erstreckt sich die Passaufnahme 114 in physischer Hinsicht von einem Boden der Aussparung 113 mit einer Resttiefe, welche der Differenz der Tiefe 116 minus der Tiefe 117 entspricht.

Wie ferner aus Figur 4 zu erkennen, ist in der Aussparung 113 das Federpaket 106 aufgenommen, welches hier mit dessen Nulllänge 118, mitten in einem unbelasteten Zustand dargestellt ist. Zu erkennen ist, dass die Nulllänge 118 des Federpakets 106 größer ist als die Tiefe 117 der Aussparung 113. Gemäß dieser bevorzugten Ausführungsform entspricht die Tiefe 117 einer Nennlänge des Federpakets 106, zugeordnet zu einer vorgebebenen Federkraft, welches das Federpaket 106 für die Bereitstellung der vorgegebenen Vorspannung aufzubringen hat. Die Tiefe 117 ist ferner länger als eine Blocklänge des Federpakets 106, welche das Federpaket 106 in einem komplett zusammengedrückten Zustand aufweist.

Jedes der Federpakete 106 umfasst eine Mehrzahl von in Richtung einer parallel zur Längsachse 2 orientierten Wirkrichtung des Federpakets 106 übereinander gestapelten Tellerfedern 112, welche auf den Passstift 107 in wechselsinniger Anordnung aneinander gereiht aufgefädelt sind. Alternativ oder zusätzlich können auch zumindest zwei der Tellerfedern 112 eine gleichsinnige Anordnung aufweisen, und/oder können zumindest zwei Tellerfedern 112 unterschiedliche Dicken und/oder unterschiedliche Materialien aufweisen.

Alternativ kann zumindest ein Federpaket 106 auch zumindest eine Spiralfeder, zumindest eine Wellenfeder und/oder zumindest eine mehrlagige Wellenfeder, sowie eine Kombination der genannten Federarten, beispielsweise eine Kombination aus Tellerfedern und Wellenfeldern, aufweisen.

Wie aus Figur 5 zu erkennen, umfasst der Spannring 102 ebenfalls Aufnahmen 115 zum Aufnehmen der Passstifte 107. Dadurch können das Mutterelement 101 und der Spannstift 102 zueinander in einer vorgegebenen Position, vorliegend zentrisch zueinander, positioniert werden. Insbesondere ist durch die Passstifte 107 der Spannring 102 relativ zum Mutterelement 101 in Richtung der Längsachse 2 geführt.

Da die Nulllänge 118 der Federpakete 106 größer ist als die Tiefe 117 der Aussparungen 113, liegen die Federpakete 106 im fixierten Zustand der Vorspanneinheit 100 in einem vorgespannten Zustand vor. Entsprechend stellen die Federpakete 106 eine Druckkraft zwischen Mutterelement 101 und Spannring 102 bereit, welche bei Lösen der Fixierung ein Auseinanderbewegen von Mutterelement 101 und Spannring 102 bewirkt.

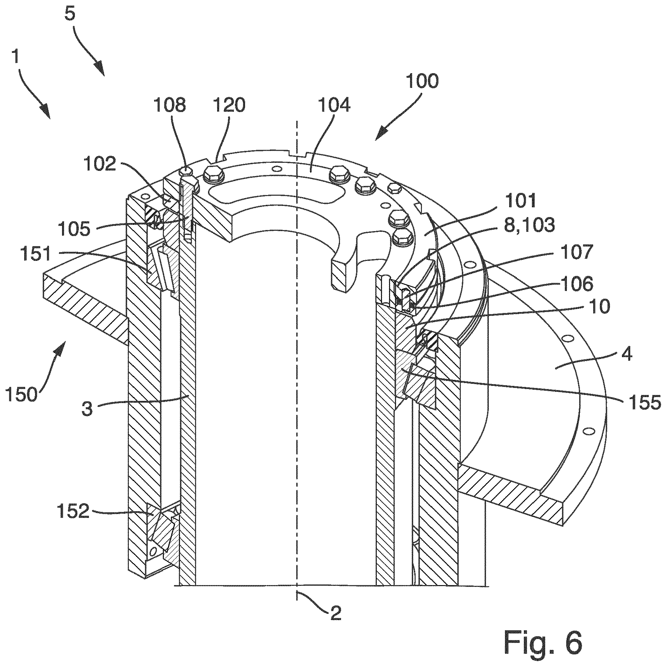

Figur 6 zeigt schematisch eine perspektivische Schnittansicht durch die Lageranordnung 1 der Behälterbehandlungsvorrichtung 5 aus Figur 1, wobei die Vorspanneinheit 100 analog zu ihrer Darstellung in Figur 3 im fixierten Zustand vorliegt und durch Aufschrauben des Mutterelements 101 via ihres Gewindeabschnitts 103 auf den durch die Spannscheibe 104 bereitgestellten Gewindeabschnitt 8 auf die Lagerwelle 2 aufgebracht ist.

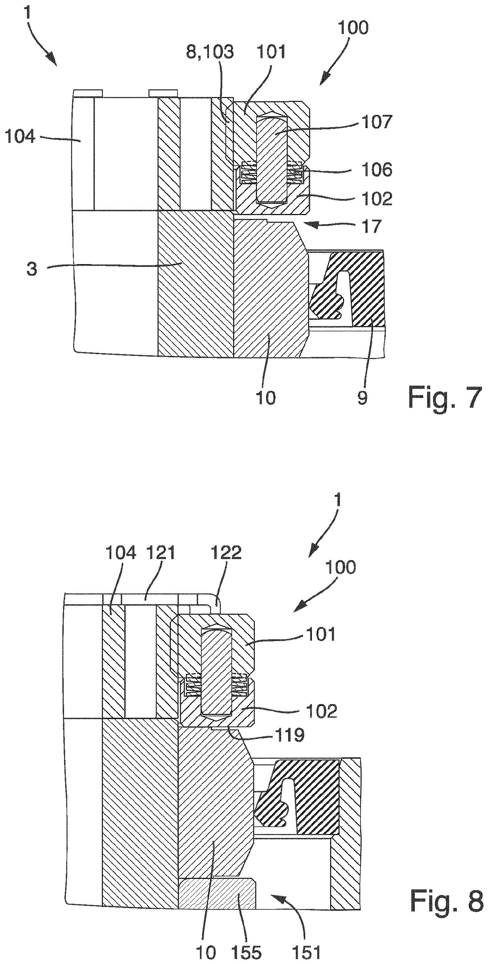

Figur 7 zeigt schematisch eine Detailseitenansicht der Schnittansicht aus Figur 6 im Bereich eines Federpakets 106. Der Gewindeabschnitt 103 des Mutterelements 101 steht wie zuvor beschrieben bereits mit dem Gewindeabschnitt 8 der an der Lagerwelle 3 befestigten Spannscheibe 104 in Eingriff. In Richtung der Längsachse 2 liegt jedoch noch ein Spalt 17 zwischen dem Spannring 102 und dem bereits direkt an dem Innenring 155 (hier nicht gezeigt) anliegenden Laufring 10 vor.

Figur 8 zeigt schematisch eine weitere Ansicht der Detailseitenansicht aus Figur 7, wobei die Vorspanneinheit 100 gegenüber ihrer Position in Figur 7 durch Drehen um die Längsachse 2 aufgrund des Eingriffs zwischen den Gewindeabschnitten 8 und 103 in Richtung auf das Wälzlager 151 zugeschraubt worden ist. Dadurch berührt die Vorspanneinheit 100, genauer eine Richtung Wälzlager 151 weisende Stirnseite 119 des Spannrings 102, den Laufring 10, welcher wiederum in Richtung der Längsachse 2 gesehen den Innenring 155 berührt. Mit anderen Worten kontaktiert die Vorspanneinheit 100 in Richtung der Längsachse 2 gesehen den Innenring 155 des Wälzlagers 151 (via des Laufrings 10).

Ferner ist an der Lagerwelle 3 ein Sicherungselement 121 in Form eines Sicherungsblechs befestigt, welches die Position der Vorspanneinheit 100 sichert, indem es mit einem Sicherungshaken 122 mit einer der Vertiefungen 120 (siehe Figuren 2, 3 und 6) in Eingriff steht. Der Eingriff ist dabei derart ausgebildet, dass in Umfangsrichtung gesehen zwischen der Vertiefung 120 und dem Sicherungshaken 122 beidseitig ein Formschluss vorliegt. Dadurch ist das mit dem Gewindeabschnitt 8 in Eingriff stehende Mutterelement 101 gegen ein Drehen um die Längsachse 2 blockiert.

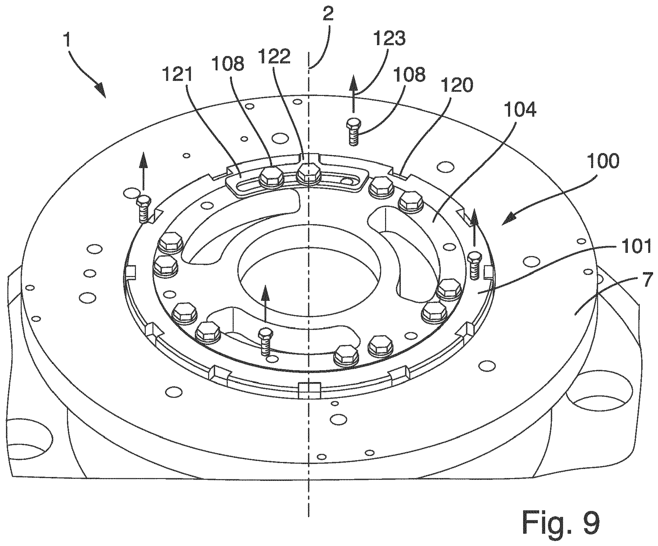

In Figur 9 ist schematisch eine perspektivische Detailansicht einer Oberseite der Behälterbehandlungsvorrichtung 5 mit montiertem Behälterbehandlungskarussell 7 gezeigt. Das mittels seines Sicherungshakens 122 mit einer der Vertiefungen 120 wie vorstehend beschrieben in Eingriff stehende Sicherungselement 121 ist vorliegend über zumindest eine, vorliegend zwei, der Schrauben 105, welche ferner zum Befestigen des Gewindebereitstellungsteils 104 an der Lagerwelle 3 dienen, an dem als Spannscheibe ausgebildeten Gewindebereitstellungsteil 104 befestigt. So kann auf zusätzliche Teile zum Befestigen des Sicherungselements 121 verzichtet werden.

Mittels der Pfeile 123 ist ein Vorgang des Lösens der Schrauben 108, welche als Fixierungselemente zum Fixieren der Vorspanneinheit 100 im fixierten Zustand fungieren, angedeutet. Durch das Lösen der Schrauben 108 ist der Spannring 102 entlang der Passstifte 107, mithin in Richtung der Längsachse 2, relativ zum Mutterelement 101 verschiebbar. Da das Mutterelement 101 weiterhin fest an der Lagerwelle 3 gehalten ist, mithin fixiert ist, wird der Spannring 102 entsprechend durch die vorliegende Vorspannung der Federpakete 106 in Richtung der Lagerung 150 gedrückt. Aufgrund des mit Hinblick auf Figur 8 beschriebenen Kontakts zwischen Spannring 102 und Innenring 155 wird die seitens der Federpakete 106 bereitgestellte Vorspannung direkt auf den Innenring 155 übertragen. Entsprechend liegt die Lagerung 150 in einem vorgegebenen angestellten Zustand vor. Die Höhe der Vorspannung der angestellten Lagerung 150 entspricht hierbei der durch via der Mehrzahl von Federpaketen 106 bereitgestellten Federkraft, welche sich aus der Summe der oben beschriebenen Federkraft bei etwa der Nennlänge der einzelnen Federpakete 106 zusammensetzt.

Im Folgenden wird unter Bezugnahme auf die Figuren 1 bis 9 ein Verfahren zum Vorspannen einer angestellten Lagerung 150 einer Lageranordnung 1 zum Lagern eines Behälterbehandlungskarussells 7 gegen einem Grundgestell 6 einer Behälterbehandlungsvorrichtung 5 in einer Getränkeabfüllanlage beschrieben.

Zunächst wird die Vorspanneinheit 100 durch Zusammenschrauben des Mutterelements 101 und des Spannrings 102 in den vorgegebenen fixierten Zustand fixiert, wie beispielsweise in Figur 3 gezeigt.

Ferner umfasst das Verfahren den Schritt des Aufbringens der Vorspanneinheit 100 an der Lagerwelle 3. Dies kann beispielsweise dadurch erfolgen, dass die Vorspanneinheit 100 via ihres Mutterelements 100 auf das bereits an der Lagerwelle 3 fixierte Gewindebereitstellungsteil 104 aufgeschraubt wird. Alternativ kann auch zunächst eine Unterbaugruppe, umfassend das Gewindebereitstellungsteil 104 und die Vorspanneinheit 100 zusammengebaut werden, und diese Unterbaugruppe dann an die Lagerwelle 3 montiert werden.

Das Anbringen umfasst ferner optional ein Schrauben der Vorspanneinheit 100 in Richtung der Lagerung 150, so dass die Vorspanneinheit 100 mit dem Innenring 155 der angestellten Lagerung 150 in Richtung der Längsachse 2 in Kontakt steht, wie in Figur 8 gezeigt und oben entsprechend beschrieben.

Vorzugsweise erfolgt beim Aufbringen der Vorspanneinheit 100 an der Lagerwelle 3 zunächst ein Anziehen der Vorspanneinheit 100, bis die Lager 151, 152 der angestellten Lagerung 150 spielfrei und bevorzugt verspannt vorliegen, und im Anschluss daran ein Lösen der Verspannung, mithin ein Lockern der Vorspanneinheit 100. Dadurch kann erzielt werden, dass die Lager 151, 152 der Lagerung 150 und alle weiteren zur Anstellung der Lagerung 150 mitwirkenden Komponenten, vorliegend die Laufringe 10, 12 und die Absätze 13, 14, 15, spielfrei, mithin in Kontakt zueinander vorliegen. Zudem kann dadurch erzielt werden, dass in den Wälzlägern bereits ein Setzen erfolgte, so dass bei einem anschließenden Aufbringen der Vorspannung durch die Vorspanneinheit 100 keine erneuten Relativbewegungen innerhalb der Lager 151, 152 zu erwarten sind.

Im Anschluss wird die Vorspanneinheit 100 zum Einstellen der vorgegebenen Vorspannung auf die angestellte Lagerung 150 erneut angezogen, bis der Spannring 102 mit dem zu verspannenden Lagerring 155 der angestellten Lagerung 150 spielfrei in Kontakt steht. Das Anziehen erfolgt dabei bis zu einem vorgegebenen Anzugsmoment, beispielsweise "handfest" gemäß der Norm EN 1090-2.

Zum eigentlichen Vorspannen der angestellten Lagerung 150 mit der vorgegebenen Vorspannung wird der fixierte Zustand gelöst, indem - wie in Hinblick auf Figur 9 beschrieben - die Schrauben 108 gelöst werden. Dadurch ist der Spannring 102 gegenüber dem Mutterelement 101 "frei gegeben", so dass er mittels der sich am Mutterring 101 abstützenden Federpakete 106 auf den Innenring 155 gedrückt wird, via welchem die Vorspannung in die Lagerung 150 übertragen wird und diese demgemäß im vorgegebenen angestellten Zustand vorliegt.

Bei einer Montage der Lageranordnung 1 können optional Unterbaugruppen vormontiert werden, um eine Montage zu erleichtern. Etwa kann ein erste Unterbaugruppe aus Vorspanneinheit 100 und Gewindebereitstellungsteil 104 wie oben beschrieben vormontiert werden. Alternativ oder zusätzlich kann eine zweite Unterbaugruppe aus Lagerwelle 3, Laufring 12, Innenring 155' und Käfig 158` samt Wälzkörpern 157' erstellt werden. In letztgenannter Unterbaugruppe kann beispielsweise für eine Montage eine dritte Unterbaugruppe, ausgebildet aus dem Lagertopf 4 und den an diesen angebrachten Außenringen 156, 156' eingeschoben werden, so dass das zweite Wälzlager 152 im zusammengebauten Zustand - wie etwa den Figuren 1 und 6 zu entnehmen - vorliegt. Der dadurch entstandenen Baugruppe kann der Käfig 158 samt Wälzkörpern 157, der Innenring 155 und der Laufring 10 in dieser Reihenfolge hinzugefügt werden.

In Anschluss kann die erste Unterbaugruppe hinzugefügt werden und das Vorspannen der Lagerung 150 wie oben beschrieben erfolgen.

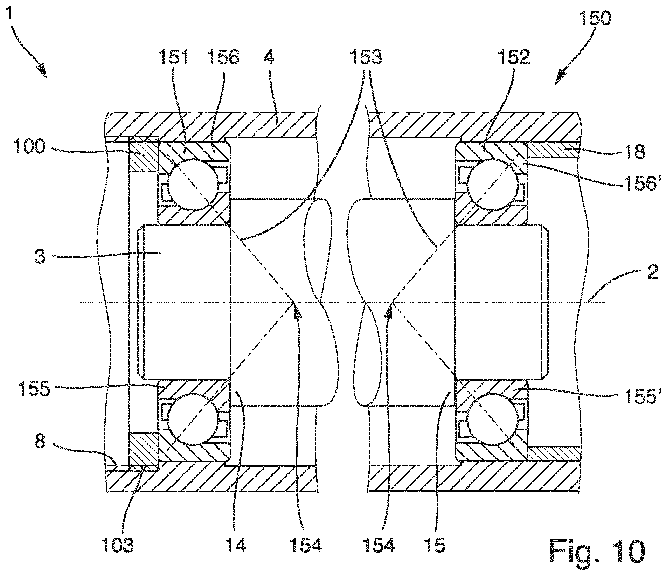

Figur 10 zeigt schematisch eine weitere Ausführungsform einer Lageranordnung 1, welche im Wesentlichen jener aus den Figuren 1-9 entspricht. Im Folgenden wird nur auf die Unterschiede zur Ausführung gemäß der Figuren 1-9 eingegangen.

Die Lagerung 150 weist hier anstelle einer O-Anordnung eine X-Anordnung auf. Entsprechend weisen die Druckkegelspitzen 154 der vorliegend als Schrägkugellager ausgebildeten Wälzlager 151, 152 nach innen bezogen auf die Lagerung 150.

Aufgrund der X-Anordnung stützen sich die Innenringe 155. 155' jeweils innen an einem Absatz 14, 15 der Lagerwelle 3 ab. Der Außenring 156` des zweiten Wälzlagers 152 stützt sich an einem an dem Lagertopf 4 fixierten Anschlag 18 ab. Gegenüber steht die hier schematisch angedeutete Vorspanneinheit 100 mittels ihres hier als Außengewinde ausgebildeten Gewindeabschnitts 108 mit einem als Innengewinde ausgebildeten Gewindeabschnitt 8 des Lagertopfes 4 in Eingriff.

Die Bereitstellung der Anstellung, mit anderen Worten die Einstellung der Vorspannung der angestellten Lagerung 150, erfolgt mithin bei dieser Ausführungsform durch Einleitung der durch die Federpakete 106 (hier nicht gezeigt) bereitgestellten Vorspannung auf den Außenring 156.

Soweit anwendbar, können alle einzelnen Merkmale, die in den Ausführungsbeispielen dargestellt sind, miteinander kombiniert und/oder ausgetauscht werden, ohne den Bereich der Erfindung, wie er in den beigefügten Ansprüchen definiert ist, zu verlassen.

### Bezugszeichenliste

- 1: Lageranordnung
- 2: Längsachse
- 3: Lagerwelle
- 4: Lagertopf
- 5: Behälterbehandlungsvorrichtung
- 6: Grundgestell
- 7: Behandlungskarussell
- 8: Gewindeabschnitt
- 9: Radialdichtring
- 10: Gleitring
- 11: Radialdichtring
- 12: Gleitring
- 13: Absatz
- 14: Absatz
- 15: Absatz
- 16: Drehachse
- 17: Spalt
- 18: Anschlag
- 100: Vorspanneinheit
- 101: Mutterelement
- 102: Spannring
- 103: Gewindeabschnitt
- 104: Gewindebereitstellungsteil
- 105: Schraube
- 106: Federpaket
- 107: Passstift
- 108: Schraube
- 110: Axiale Seite
- 111: Axiale Seite
- 112: Tellerfeder
- 113: Aussparung
- 114: Passaufnahme
- 115: Aufnahme
- 116: Tiefe
- 117: Tiefe
- 118: Nulllänge
- 119: Stirnseite
- 120: Vertiefung
- 121: Sicherungselement
- 122: Sicherungshaken
- 150: Angestellte Lagerung
- 151: Erstes Wälzlager
- 152: Zweites Wälzlager
- 153: Drucklinie
- 154: Druckkegelspitze
- 155: Innenring
- 156: Außenring
- 157: Wälzkörper
- 158: Käfig
- 159: Abstand

## Patentansprüche

1. Lageranordnung (1) zum Lagern eines Behälterbehandlungskarussells (7) gegen ein Grundgestell (6) einer Behälterbehandlungsvorrichtung (5) in einer Getränkeabfüllanlage, umfassend eine sich entlang einer Längsachse (2) erstreckende Lagerwelle (3), einen relativ zur Lagerwelle (3) drehbaren Lagertopf (4), eine zwischen der Lagerwelle (3) und dem Lagertopf (4) angeordnete angestellte Lagerung (150) zum Lagern des Lagertopfes (40) gegen die Lagerwelle (3), und eine ringförmige Vorspanneinheit (100) zum Aufbringen einer vorgegebenen Vorspannung auf die angestellte Lagerung (150),
**dadurch gekennzeichnet, dass**
die ringförmige Vorspanneinheit (100) zum Aufbringen der Vorspannung auf die angestellte Lagerung (150) eine Mehrzahl von bezogen auf die Längsachse (2) in Umfangsrichtung gleichmäßig verteilen Federpaketen (106) umfasst.

2. Lageranordnung (1) gemäß Anspruch 1, **dadurch gekennzeichnet, dass** zumindest ein Federpaket (106) eine Spiralfeder, eine Wellenfeder und/oder eine Tellerfeder (112) umfasst, wobei bevorzugt das Federpaket (106) eine mehrlagige Wellenfeder und/oder eine Mehrzahl von in Richtung einer Wirkrichtung des Federpakets (106) übereinander gestapelter Tellerfedern (112) umfasst.

3. Lageranordnung (1) gemäß Anspruch 1 oder 2, **dadurch gekennzeichnet, dass** die Vorspanneinheit (100) ein Mutterelement (101) mit einem Gewindeabschnitt (103), welcher mit einem korrespondierend geformten Gewindeabschnitt (8) an der Lagerwelle (3) oder dem Lagertopf (4) in Eingriff ist, und einen Spannring (102) zum Übertragen der via der Federpakete (106) bereitgestellten Vorspannung auf einen Lagerring (155, 156) der angestellten Lagerung (150) umfasst, wobei die Federpakete (106) zwischen dem Mutterelement (101) und dem Spannring (102) angeordnet sind.

4. Lageranordnung (1) gemäß dem vorstehenden Anspruch, **dadurch gekennzeichnet, dass** ein Gewindebereitstellungsteil (104) zum Bereitstellen des Gewindeabschnitts (8) an der Lagerwelle (3) oder zum Bereitstellen des Gewindeabschnitts (8) an dem Lagertopf (4) an der Lagerwelle (3) respektive dem Lagertopf (4) fixiert ist, wobei das Gewindebereitstellungsteil (104) bevorzugt an einer Stirnseite oder einem sich in radialer Richtung erstreckenden Flansch der Lagerwelle (3) oder einer Stirnseite oder einem sich in radialer Richtung erstreckenden Flansch des Lagertopfes (4) fixiert ist.

5. Lageranordnung (1) gemäß einem der vorstehenden Ansprüche, **dadurch gekennzeichnet, dass** das Mutterelement (101) und/oder der Spannring (102) eine Mehrzahl von zum Aufnehmen eines Federpakets (106) ausgebildeten Aussparungen (113) aufweisen, wobei die Aussparungen (113) bevorzugt eine Tiefe (117) aufweisen, die größer ist als eine Blocklänge des aufgenommenen Federpakets (106), welche das Federpaket (106) in einem komplett zusammengedrückten Zustand aufweist, wobei bevorzugt jeweils eine Aufnahme einem Federpaket (106) zugeordnet ist, wobei bevorzugt die Tiefe (117) einer einer vorgebebenen Federkraft des Federpakets (106) zugeordneten Nennlänge entspricht.

6. Lageranordnung (1) gemäß einem der Ansprüche 3 bis 5, **dadurch gekennzeichnet, dass** zumindest ein Positionierungselement, bevorzugt ein Passstift (107), zum Positionieren des Mutterelements (101) und des Spannrings (102) relativ zueinander in Umfangsrichtung und in radialer Richtung und/oder zum Führen des Spannrings (102) in Richtung der Längsachse (2) relativ zum Mutterelement (101) zwischen dem Mutterelement (101) und dem Spannring (102) angeordnet ist, wobei bevorzugt eine Mehrzahl von Positionierungselementen vorgesehen ist, wobei bevorzugt jeweils ein Positionierungselement jeweils einem Federpaket (106) zugeordnet ist, wobei bevorzugt zumindest ein Positionierungselement bezogen auf eine Mittelachse eines Federpakets (106) zentrisch zur Mittelachse angeordnet ist, wobei das Federpaket (106) das Positionierungselement bevorzugt bezogen auf die Mittelachse in Umfangsrichtung umgibt, wobei bevorzugt das Positionierungselement zum Vorpositionieren und/oder Positionieren des Federpakets (106) in Richtung der Längsachse (2) ausgebildet ist.

7. Lageranordnung (1) gemäß einem der Ansprüche 3 bis 6, **dadurch gekennzeichnet, dass** die Vorspanneinheit zumindest ein Fixierungselement zum Fixieren des Mutterelements (101) und des Spannrings (102) zueinander umfasst, wobei bevorzugt in einem vorgegebenen fixierten Zustand eine der angestellten Lagerung (150) zugewandten axiale Seite (110) des Mutterelements (101) mit einer der angestellten Lagerung (150) abgewandten axialen Seite (111) des Spannrings (102) in Kontakt steht.

8. Lageranordnung (1) gemäß einem der Ansprüche 3 bis 7, **dadurch gekennzeichnet, dass** der Gewindeabschnitt (103) des Mutterelements (101) als Innengewinde ausgebildet ist und mit einem an der Lagerwelle (3) als Außengewinde ausgebildeten Gewindeabschnitt (8) der Lagerwelle (3) in Eingriff steht, wobei bevorzugt die angestellte Lagerung (150) eine O-Anordnung aufweist, wobei bevorzugt die Vorspanneinheit (100), bevorzugt via dem Spannring (102), die mittels der Federpakete (106) bereitgestellte Vorspannung auf einen Innenring (155) der angestellten Lagerung (150) aufbringt, oder **dass** der Gewindeabschnitt (103) des Mutterelements (101) als Außengewinde ausgebildet ist und mit einem an dem Lagertopf (4) als Innengewinde ausgebildeten Gewindeabschnitt (8) des Lagertopfes (4) in Eingriff steht, wobei bevorzugt die angestellte Lagerung (150) eine X-Anordnung aufweist, wobei bevorzugt die Vorspanneinheit (100), bevorzugt via dem Spannring (102), die mittels der Federpakete (106) bereitgestellte Vorspannung auf einen Außenring (156) der angestellten Lagerung (150) aufbringt.

9. Lageranordnung (1) gemäß einem der vorstehenden Ansprüche, **dadurch gekennzeichnet, dass** die Vorspanneinheit (100) eine Sicherungselement (121) zum Sichern der Vorspanneinheit (100) gegenüber der Lagerwelle (2) oder dem Lagertopf (4), bevorzugt zum Sichern des Mutterelementes (101) gegen ein Verdrehen um die Längsachse (2) relativ zur Lagerwelle (2) oder zum Lagertopf (4) umfasst, wobei das Sicherungselement (121) bevorzugt in Form eines Sicherungsbleches ausgebildet ist, wobei bevorzugt das Sicherungselement (121) an der Lagerwelle (3) oder an dem Lagertopf (4) fixierbar ist, wobei bevorzugt durch die Fixierung des Sicherungselements (121) die Vorspanneinheit (100) , bevorzugt das Mutterelement (101), gegen ein Verdrehen gesichert ist.

10. Lageranordnung (1) gemäß einem der vorstehenden Ansprüche, **dadurch gekennzeichnet, dass** die angestellte Lagerung (150) zwei in Längsachse (2) gesehen in einem vorgegebenen Abstand (159) zueinander angeordnete Wälzlager (151, 152), umfasst, wobei bevorzugt jedes Wälzlager (151, 152) einen Innenring (155) und einen Außenring (156) und eine Mehrzahl von zwischen dem Innenring (155) und dem Außenring (156) angeordneten Wälzkörpern (157) umfasst, wobei bevorzugt zumindest ein Wälzlager (151, 152) als Kugellager, Rollenlager, vorzugsweise Zylinderrollenlager oder Kegelrollenlager, ausgebildet ist, wobei bevorzugt zumindest ein Wälzlager (151, 152), vorzugsweise alle Wälzlager (151, 152), als Schräglager ausgebildet sind.

11. Behälterbehandlungsvorrichtung (5) für eine Getränkeabfüllanlage, umfassend ein Grundgestell (6) und ein um eine zentrale Drehachse relativ zum Grundgestell (6) drehbares Behälterbehandlungskarussell (7),
**dadurch gekennzeichnet, dass**
zwischen dem Grundgestell (6) und dem Behälterbehandlungskarussell (7) eine Lageranordnung (1) gemäß einem der vorstehenden Ansprüche zum Lagern des Behälterbehandlungskarussells (7) an dem Grundgestell (6) angeordnet ist.

12. Verfahren zum Vorspannen einer angestellten Lagerung (150) einer Lageranordnung (1) zum Lagern eines Behälterbehandlungskarussells (7) gegen ein Grundgestell (6) einer Behälterbehandlungsvorrichtung (5) in einer Getränkeabfüllanlage gemäß einem der Ansprüche 1 bis 10, umfassend das
- Fixieren der Vorspanneinheit (100), bevorzugt des Mutterelements (101) und des Spannrings (102) der Vorspanneinheit (100) zueinander, in einem vorgegebenen fixierten Zustand;
- Aufbringen der Vorspanneinheit (100) an der Lagerwelle (3) oder dem Lagertopf (4), so dass die Vorspanneinheit (100) mit einem Lagerring (155, 156) der angestellten Lagerung (150) in Richtung der Längsachse (2) in Kontakt steht;
- Sichern der Position der Vorspanneinheit (100) an der Lagerwelle (3) respektive dem Lagertopf (4); und
- Lösen des fixierten Zustands.

13. Verfahren gemäß Anspruch 12, **dadurch gekennzeichnet, dass** das Aufbringen der Vorspanneinheit (100) durch ein Aufschrauben der Vorspanneinheit (100) an die Lagerwelle (3) oder an den Lagertopf (4) umfasst, wobei bevorzugt das Sichern der Position der Vorspanneinheit (100) ein Sichern der aufgeschraubten Vorspanneinheit (100) gegen ein Verdrehen gegenüber der Lagerwelle (3), wenn die Vorspanneinheit (100) an die Lagerwelle (3) aufgeschraubt ist, respektive gegenüber dem Lagertopf (4), wenn die Vorspanneinheit (100) an den Lagertopf (4) aufgeschraubt ist, umfasst.

14. Verfahren gemäß Anspruch 12 oder 13, **dadurch gekennzeichnet, dass** der Schritt des Aufbringens der Vorspanneinheit (100) an der Lagerwelle (3) oder dem Lagertopf (4), so dass die Vorspanneinheit (100) mit einem Lagerring (155, 156) der angestellten Lagerung (150) in Richtung der Längsachse (2) in Kontakt steht, ein Anziehen der Vorspanneinheit (100) bis die Lager (151, 152) der angestellten Lagerung (150) spielfrei und bevorzugt verspannt vorliegen, ein anschließendes Lockern der Vorspanneinheit (100), und ein daraufhin erfolgendes erneutes Anziehen der Vorspanneinheit (100) zum Einstellen der vorgegebenen Vorspannung auf die angestellte Lagerung (150) umfasst.

15. Verfahren gemäß einem der Ansprüche 12 bis 14, **dadurch gekennzeichnet, dass** der Schritt des erneuten Anziehens der Vorspanneinheit (100) zum Einstellen der vorgegebenen Vorspannung auf die angestellte Lagerung (150) ein Anziehen des Mutterelements (101), bis der Spannring (102) mit dem zu verspannenden Lagerring (155, 156) der angestellten Lagerung (150) spielfrei in Kontakt steht, umfasst, wobei das Mutterelement (101) bevorzugt mit einem vorgegebenen Anzugsmoment angezogen wird, **und/oder dass** der Schritt des Lösens des fixierten Zustands ein Lösen zumindest eines Fixierungselements zum Fixieren des Mutterelements (101) und des Spannrings (10) zueinander im vorgegebenen fixierten Zustand umfasst.

## Claims

1. Bearing arrangement (1) for mounting a container processing carousel (7) with respect to a base frame (6) of a container processing apparatus (5) in a beverage filling installation, comprising a bearing shaft (3) which extends along a longitudinal axis (2), a bearing cup (4) which is rotatable relative to the bearing shaft (3), an adjusted bearing assembly (150) arranged between the bearing shaft (3) and the bearing cup (4) for mounting the bearing cup (40) with respect to the bearing shaft (3), and an annular preload unit (100) for applying a specified preload to the adjusted bearing assembly (150),
**characterized in that**
the annular preload unit (100) for applying the preload to the adjusted bearing assembly (150) comprises a plurality of spring packages (106) which are distributed uniformly in a circumferential direction relative to the longitudinal axis (2).

2. Bearing arrangement (1) according to claim 1, **characterized in that** at least one spring package (106) comprises a spiral spring, a wave spring and/or a disc spring (112), the spring package (106) preferably comprising a multi-layer wave spring and/or a plurality of disc springs (112) stacked one on top of the other in the direction of a direction of action of the spring package (106).

3. Bearing arrangement (1) according to either claim 1 or claim 2, **characterized in that** the preload unit (100) comprises a nut element (101) having a threaded portion (103) which is in engagement with a correspondingly shaped threaded portion (8) on the bearing shaft (3) or the bearing cup (4), and comprises a bracing ring (102) for transmitting the preload, which is provided by means the spring packages (106), to a bearing ring (155, 156) of the adjusted bearing assembly (150), the spring packages (106) being arranged between the nut element (101) and the bracing ring (102).

4. Bearing arrangement (1) according to the preceding claim, **characterized in that** a thread provision part (104), in order to provide the threaded portion (8) on the bearing shaft (3) or in order to provide the threaded portion (8) on the bearing cup (4), is fixed to the bearing shaft (3) or to the bearing cup (4) respectively, the thread provision part (104) preferably being fixed to an end face, or to a flange extending in a radial direction, of the bearing shaft (3), or to an end face, or to a flange extending in a radial direction, of the bearing cup (4).

5. Bearing arrangement (1) according to any the preceding claims, **characterized in that** the nut element (101) and/or the bracing ring (102) have a plurality of cutouts (113) which are configured to receive a spring package (106), the cutouts (113) preferably having a depth (117) that is greater than a block length of the received spring package (106) that the spring package (106) exhibits in a fully compressed state, one receptacle preferably being associated with one spring package (106) in each case, the depth (117) preferably corresponding to a nominal length associated with a specified spring force of the spring package (106).

6. Bearing arrangement (1) according to any of claims 3 to 5, **characterized in that** at least one positioning element, preferably a dowel pin (107), is arranged between the nut element (101) and the bracing ring (102) in order to position the nut element (101) and the bracing ring (102) relative to one another in a circumferential direction and in a radial direction and/or in order to guide the bracing ring (102) in the direction of the longitudinal axis (2) relative to the nut element (101), a plurality of positioning elements preferably being provided, one positioning element preferably being associated with each spring package (106), preferably at least one positioning element, in relation to a central axis of a spring package (106), being arranged centrally with respect to the central axis, the spring package (106) surrounding the positioning element preferably in a circumferential direction in relation to the central axis, the positioning element preferably being configured to provisionally position and/or position the spring package (106) in the direction of the longitudinal axis (2).

7. Bearing arrangement (1) according to any of claims 3 to 6, **characterized in that** the preload unit comprises at least one fixing element for fixing the nut element (101) and the bearing ring (102) with respect to one another, an axial side (110) of the nut element (101) that faces the adjusted bearing assembly (150) being in contact with an axial side (111) of the bearing ring (102) that faces away from the adjusted bearing assembly (150), preferably in a specified fixed state.

8. Bearing arrangement (1) according to any of claims 3 to 7, **characterized in that** the threaded portion (103) of the nut element (101) is configured as an internal thread and is in engagement with a threaded portion (8) of the bearing shaft (3), which is formed on the bearing shaft (3) as an external thread, the adjusted bearing assembly (150) preferably having an O arrangement, the preload unit (100) preferably applying the preload provided by means of the spring packages (106) to an inner ring (155) of the adjusted bearing assembly (150), preferably via the bearing ring (102), or **in that** the threaded portion (103) of the nut element (101) is configured as an external thread and is in engagement with a threaded portion (8) of the bearing cup (4), which is formed on the bearing cup (4) as an internal thread, the adjusted bearing assembly (150) preferably having an X arrangement, the preload unit (100) preferably applying the preload provided by means of the spring packages (106) to an outer ring (156) of the adjusted bearing assembly (150), preferably via the bearing ring (102).

9. Bearing arrangement (1) according to any of the preceding claims, **characterized in that** the preload unit (100) comprises a securing element (121) for securing the preload unit (100) relative to the bearing shaft (2) or relative to the bearing cup (4), preferably for securing the nut element (101) against rotation about the longitudinal axis (2) relative to the bearing shaft (2) or relative to the bearing cup (4), the securing element (121) preferably being configured in the form of a securing plate, the securing element (121) preferably being fixable to the bearing shaft (3) or to the bearing cup (4), the preload unit (100), preferably the nut element (101), preferably being secured against rotation by means of the fixing of the securing element (121).

10. Bearing arrangement (1) according to any of the preceding claims, **characterized in that** the adjusted bearing assembly (150) comprises two rolling bearings (151, 152) which are arranged with a specified spacing (159) to one another as viewed along the longitudinal axis (2), each rolling bearing (151, 152) preferably comprising an inner ring (155) and an outer ring (156) and a plurality of rolling elements (157) arranged between the inner ring (155) and the outer ring (156), at least one rolling bearing (151, 152) preferably being configured as a ball bearing, roller bearing, preferably cylindrical-roller bearing or tapered-roller bearing, at least one rolling bearing (151, 152), preferably all rolling bearings (151, 152), preferably being configured as angular contact bearings.

11. Container processing apparatus (5) for a beverage filling installation, comprising a base frame (6) and a container processing carousel (7) which is rotatable about a central axis of rotation relative to the base frame (6),
**characterized in that**
a bearing arrangement (1) according to any of the preceding claims is arranged between the base frame (6) and the container processing carousel (7) for mounting the container processing carousel (7) on the base frame (6).

12. Method for preloading an adjusted bearing assembly (150) of a bearing arrangement (1) for mounting a container processing carousel (7) with respect to a base frame (6) of a container processing apparatus (5) in a beverage filling installation according to any of claims 1 to 10, comprising
- fixing the preload unit (100), preferably the nut element (101) and the bracing ring (102) of the preload unit (100) with respect to one another, in a specified fixed state;
- attaching the preload unit (100) to the bearing shaft (3) or the bearing cup (4) such that the preload unit (100) is in contact with a bearing ring (155, 156) of the adjusted bearing assembly (150) in the direction of the longitudinal axis (2);
- securing the position of the preload unit (100) on the bearing shaft (3) or the bearing cup (4) respectively; and
- releasing the fixed state.

13. Method according to claim 12, **characterized in that** the attachment of the preload unit (100) comprises screwing the preload unit (100) onto the bearing shaft (3) or onto the bearing cup (4), securing the position of the preload unit (100) preferably comprising securing the screwed-on preload unit (100) against rotation relative to the bearing shaft (3), if the preload unit (100) has been screwed onto the bearing shaft (3), or relative to the bearing cup (4), if the preload unit (100) has been screwed onto the bearing cup (4).

14. Method according to claim 12 or 13, **characterized in that** the step of attaching the preload unit (100) to the bearing shaft (3) or the bearing cup (4), such that the preload unit (100) is in contact with a bearing ring (155, 156) of the adjusted bearing assembly (150) in the direction of the longitudinal axis (2), comprises tightening the preload unit (100) until the bearings (151, 152) of the adjusted bearing assembly (150) are in a play-free and preferably braced state, subsequently loosening the preload unit (100), and then retightening the preload unit (100) in order to set the specified preload on the adjusted bearing assembly (150).

15. Method according to any of claims 12 to 14, **characterized in that** the step of retightening the preload unit (100) in order to set the specified preload on the adjusted bearing assembly (150) comprises tightening the nut element (101) until the bracing ring (102) is in play-free contact with the bearing ring (155, 156), which is to be braced, of the adjusted bearing assembly (150), the nut element (101) preferably being tightened with a specified tightening torque, and/or **in that** the step of releasing the fixed state comprises releasing at least one fixing element for fixing the nut element (101) and the bracing ring (10) with respect to one another in the specified fixed state.

## Revendications

1. Ensemble palier (1) permettant de monter un carrousel de traitement de récipients (7) par rapport à un bâti de base (6) d'un dispositif de traitement de récipients (5) dans une installation de remplissage de boissons, comprenant un arbre de palier (3) s'étendant le long d'un axe longitudinal (2), une cuvette de palier (4) pouvant tourner par rapport à l'arbre de palier (3), un support sur palier réglé (150), disposé entre l'arbre de palier (3) et la cuvette de palier (4), permettant de monter la cuvette de palier (40) par rapport à l'arbre de palier (3), et une unité de précontrainte annulaire (100) permettant d'appliquer une contrainte prédéfinie sur le support sur palier réglé (150),
**caractérisé en ce que**
l'unité de précontrainte annulaire (100) permettant d'appliquer la précontrainte sur le support sur palier réglé (150) comprend une pluralité de groupes de ressorts (106) distribués uniformément dans la direction périphérique par rapport à l'axe longitudinal (2).

2. Ensemble palier (1) selon la revendication 1, **caractérisé en ce qu**'au moins un groupe de ressorts (106) comprend un ressort spiral, un ressort ondulé et/ou un ressort Belleville (112), de préférence le groupe de ressorts (106) comprenant un ressort ondulé multicouche et/ou une pluralité de ressorts Belleville (112) empilés les uns sur les autres dans la direction d'une direction d'action du groupe de ressorts (106).

3. Ensemble palier (1) selon la revendication 1 ou 2, **caractérisé en ce que** l'unité de précontrainte (100) comprend un élément écrou (101) comportant une partie filetée (103), laquelle est en prise avec une partie filetée (8), formée de manière correspondante, sur l'arbre de palier (3) ou la cuvette de palier (4), et une bague de serrage (102) permettant de transmettre la précontrainte fournie par le biais des groupes de ressorts (106) à une bague de palier (155, 156) du support sur palier réglé (150), les groupes de ressorts (106) étant disposés entre l'élément écrou (101) et la bague de serrage (102).

4. Ensemble palier (1) selon la revendication précédente, **caractérisé en ce qu**'une partie de fourniture de filetage (104) permettant de fournir la partie filetée (8) sur l'arbre de palier (3) ou permettant de fournir la partie filetée (8) sur la cuvette de palier (4) est fixée à l'arbre de palier (3), respectivement à la cuvette de palier (4), la partie de fourniture de filetage (104) étant de préférence fixée à un côté frontal ou une bride, s'étendant dans la direction radiale, de l'arbre de palier (3) ou à un côté frontal ou une bride, s'étendant dans la direction radiale, de la cuvette de palier (4).

5. Ensemble palier (1) selon l'une des revendications précédentes, **caractérisé en ce que** l'élément écrou (101) et/ou la bague de serrage (102) présentent une pluralité d'évidements (113) réalisés pour le logement d'un groupe de ressorts (106), les évidements (113) présentant de préférence une profondeur (117) qui est supérieure à une longueur de bloc du groupe de ressorts logé (106), longueur que présente le groupe de ressorts (106) dans un état complètement comprimé, de préférence respectivement un logement étant associé à un groupe de ressorts (106), de préférence la profondeur (117) correspondant à une longueur nominale associée à une force de ressort prédéfinie du groupe de ressorts (106).

6. Ensemble palier (1) selon l'une des revendications 3 à 5, **caractérisé en ce qu**'au moins un élément de positionnement, de préférence une goupille de centrage (107), permettant le positionnement de l'élément écrou (101) et de la bague de serrage (102) l'un par rapport à l'autre dans la direction périphérique et dans la direction radiale et/ou permettant le guidage de la bague de serrage (102) dans la direction de l'axe longitudinal (2) par rapport à l'élément écrou (101) est disposé entre l'élément écrou (101) et la bague de serrage (102), de préférence une pluralité d'éléments de positionnement étant prévue, de préférence respectivement un élément de positionnement étant associé respectivement à un groupe de ressorts (106), de préférence au moins un élément de positionnement étant disposé, par rapport à un axe médian d'un groupe de ressorts (106), de manière centrée par rapport à l'axe médian, le groupe de ressorts (106) entourant l'élément de positionnement de préférence dans la direction périphérique par rapport à l'axe médian, de préférence l'élément de positionnement étant réalisé pour le pré-positionnement et/ou le positionnement du groupe de ressorts (106) dans la direction de l'axe longitudinal (2).

7. Ensemble palier (1) selon l'une des revendications 3 à 6, **caractérisé en ce que** l'unité de précontrainte comprend au moins un élément de fixation permettant de fixer l'élément écrou (101) et la bague de serrage (102) l'un par rapport à l'autre, de préférence, dans un état fixé prédéfini, un côté axial (110), tourné vers le support sur palier réglé (150), de l'élément écrou (101) étant en contact avec un côté axial (111), opposé au support sur palier réglé (150), de la bague de serrage (102).

8. Ensemble palier (1) selon l'une des revendications 3 à 7, **caractérisé en ce que** la partie filetée (103) de l'élément écrou (101) est réalisée sous forme de filetage intérieur et est en prise avec une partie filetée (8) de l'arbre de palier (3) réalisée sur l'arbre de palier (3) sous forme de filetage extérieur, de préférence le support sur palier réglé (150) présentant un agencement en O, de préférence l'unité de précontrainte (100), de préférence par le biais de la bague de serrage (102), appliquant la précontrainte fournie à l'aide des groupes de ressorts (106) sur une bague intérieure (155) du support sur palier réglé (150), ou **en ce que** la partie filetée (103) de l'élément écrou (101) est réalisée sous forme de filetage extérieur et est en prise avec une partie filetée (8) de la cuvette de palier (4) réalisée sur la cuvette de palier (4) sous forme de filetage intérieur, de préférence le support sur palier réglé (150) présentant un agencement en X, de préférence l'unité de précontrainte (100), de préférence par le biais de la bague de serrage (102), appliquant la précontrainte fournie à l'aide des groupes de ressorts (106) sur une bague extérieure (156) du support sur palier réglé (150).

9. Ensemble palier (1) selon l'une des revendications précédentes, **caractérisé en ce que** l'unité de précontrainte (100) comprend un élément de blocage (121) permettant de bloquer l'unité de précontrainte (100) par rapport à l'arbre de palier (2) ou la cuvette de palier (4), de préférence permettant de bloquer l'élément écrou (101) en rotation autour de l'axe longitudinal (2) par rapport à l'arbre de palier (2) ou par rapport à la cuvette de palier (4), l'élément de blocage (121) étant réalisé de préférence sous la forme d'une tôle de blocage, de préférence l'élément de blocage (121) pouvant être fixé à l'arbre de palier (3) ou à la cuvette de palier (4), de préférence par le biais de la fixation de l'élément de blocage (121), l'unité de précontrainte (100), de préférence l'élément écrou (101), étant bloqué en rotation.

10. Ensemble palier (1) selon l'une des revendications précédentes, **caractérisé en ce que** le support sur palier réglé (150) comprend deux paliers à roulement (151, 152) disposés à une distance prédéfinie (159) l'un de l'autre vus dans l'axe longitudinal (2), de préférence chaque palier à roulement (151, 152) comprenant une bague intérieure (155) et une bague extérieure (156) et une pluralité de corps de roulement (157) disposés entre la bague intérieure (155) et la bague extérieure (156), de préférence au moins un palier à roulement (151, 152) étant réalisé sous forme de palier à billes, de palier à rouleaux, de préférence de palier à rouleaux cylindriques ou de palier à rouleaux coniques, de préférence au moins un palier à roulement (151, 152), de préférence tous les paliers à roulement (151, 152) étant réalisés sous forme de paliers à contact oblique.

11. Dispositif de traitement de récipients (5) pour une installation de remplissage de boissons, comprenant un bâti de base (6) et un carrousel de traitement de récipients (7) pouvant tourner par rapport au bâti de base (6) autour d'un axe de rotation central,
**caractérisé en ce**
**qu**'un ensemble palier (1) selon l'une des revendications précédentes, permettant de monter le carrousel de traitement de récipients (7) sur le bâti de base (6), est disposé entre le bâti de base (6) et le carrousel de traitement de récipients (7).

12. Procédé permettant de précontraindre un support sur palier réglé (150) d'un ensemble palier (1) permettant de monter un carrousel de traitement de récipients (7) par rapport à un bâti de base (6) d'un dispositif de traitement de récipients (5) dans une installation de remplissage de boissons selon l'une des revendications 1 à 10, comprenant
- la fixation de l'unité de précontrainte (100), de préférence de l'élément écrou (101) et de la bague de serrage (102) de l'unité de précontrainte (100) l'un par rapport à l'autre, dans un état fixé prédéfini ;
- l'application de l'unité de précontrainte (100) sur l'arbre de palier (3) ou la cuvette de palier (4), en sorte que l'unité de précontrainte (100) soit en contact avec une bague de palier (155, 156) du support sur palier réglé (150) dans la direction de l'axe longitudinal (2) ;
- le blocage de la position de l'unité de précontrainte (100) sur l'arbre de palier (3), respectivement la cuvette de palier (4) ; et
- le relâchement de l'état fixé.

13. Procédé selon la revendication 12, **caractérisé en ce que** l'application de l'unité de précontrainte (100) comprend un vissage de l'unité de précontrainte (100) sur l'arbre de palier (3) ou sur la cuvette de palier (4), de préférence le blocage de la position de l'unité de précontrainte (100) comprenant un blocage en rotation de l'unité de précontrainte vissée (100) par rapport à l'arbre de palier (3), lorsque l'unité de précontrainte (100) est vissée sur l'arbre de palier (3), respectivement par rapport à la cuvette de palier (4), lorsque l'unité de précontrainte (100) est vissée sur la cuvette de palier (4).

14. Procédé selon la revendication 12 ou 13, **caractérisé en ce que** l'étape d'application de l'unité de précontrainte (100) sur l'arbre de palier (3) ou la cuvette de palier (4), en sorte que l'unité de précontrainte (100) soit en contact avec une bague de palier (155, 156) du support sur palier réglé (150) dans la direction de l'axe longitudinal (2), comprend un serrage de l'unité de précontrainte (100) jusqu'à ce que les paliers (151, 152) du support sur palier réglé (150) soient sans jeu et de préférence serrés, un desserrage subséquent de l'unité de précontrainte (100), et un nouveau serrage, ayant lieu ensuite, de l'unité de précontrainte (100) permettant de régler la précontrainte prédéfinie sur le support sur palier réglé (150).

15. Procédé selon l'une des revendications 12 à 14, **caractérisé en ce que** l'étape de nouveau serrage de l'unité de précontrainte (100) permettant de régler la précontrainte prédéfinie sur le support sur palier réglé (150) comprend un serrage de l'élément écrou (101) jusqu'à ce que la bague de serrage (102) soit en contact sans jeu avec la bague de palier (155, 156) à serrer du support sur palier réglé (150), l'élément écrou (101) étant serré de préférence avec un couple de serrage prédéfini, et/ou **en ce que** l'étape de relâchement de l'état fixé comprend un relâchement d'au moins un élément de fixation permettant de fixer l'élément écrou (101) et la bague de serrage (10) l'un par rapport à l'autre dans l'état fixé prédéfini.
